# EUROPEAN PATENT SPECIFICATION

(11) **EP 1 677 326 B1**
(45) Date of publication and mention of the grant of the patent: **14.01.2009**
(21) Application number: 04792300.8
(22) Date of filing: 13.10.2004
(51) Int. Cl.: H01H 25/06, H01H 19/56

(54) **ROTATING AND PRESSING OPERATION TYPE ELECTRONIC COMPONENT AND ELECTRONIC DEVICE USING THE SAME**
ELEKTRONISCHE KOMPONENTE DES DREH- UND DRUCKBETRIEBSTYPS UND ELEKTRONISCHE EINRICHTUNG DAMIT
COMPOSANT ELECTRONIQUE DU TYPE FONCTIONNANT PAR ROTATION ET PRESSION ET DISPOSITIF ELECTRONIQUE COMPORTANT LEDIT COMPOSANT

(30) Priority: 20.10.2003 JP 2003359243
(43) Date of publication of application: 05.07.2006
(73) Proprietor: OMRON CORPORATION, Kyoto-shi, Kyoto 600-8530 (JP)
(72) Inventor: MIYOSHI, Kazuaki c/o Omron Corporation 801, Shimogyo-ku Kyoto-shi, Kyoto 6008530 (JP); KOMIYA, Keiji c/o Omron Corporation 801, Minamifu, Shimogyo-ku Kyoto-shi, Kyoto 6008530 (JP); MIYASAKA, Takeshi c/o Omron Corporation 801, Shimogyo-ku Kyoto-shi, Kyoto 6008530 (JP)
(74) Representative: Brykman, Georges
(86) International application number: PCT/JP2004/015059
(87) International publication number: WO 2005/038843

(56) References cited:
- GB-A- 1 537 028
- JP-A- 9 102 247
- JP-A- 2001 135 197
- JP-A- 2001 167 665
- JP-Y2- 56 039 235
- US-B1- 6 194 673

## Description

### Technical Field

The present invention relates to a rotating-pressing operation type electronic part usable in a portable telephone, a personal computer, etc., and an electronic device using this rotating-pressing operation type electronic part.

### Background Art

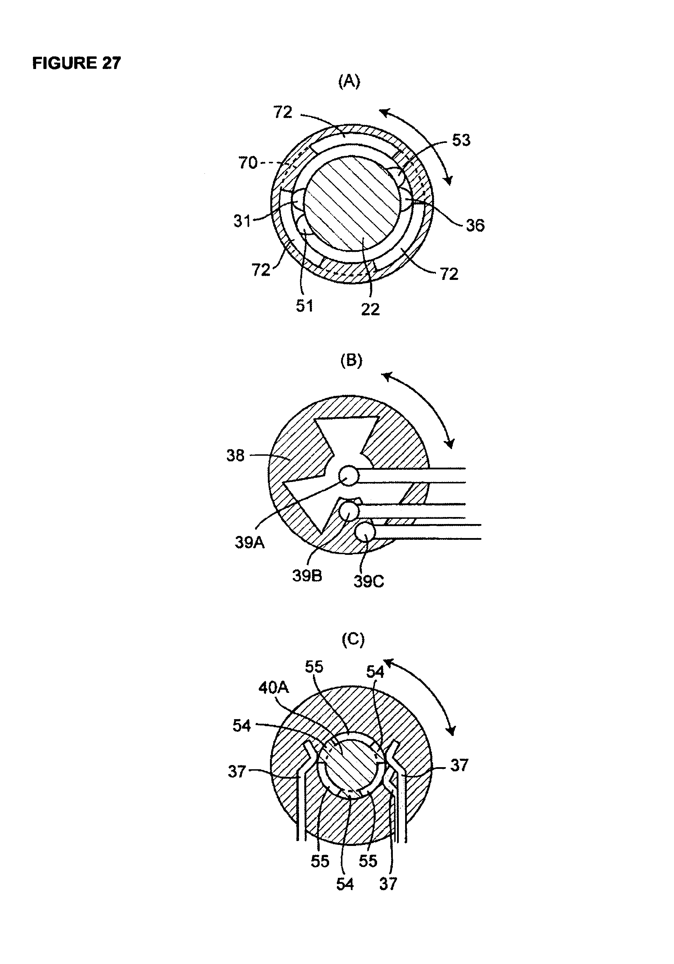

As a contact mechanism of the rotating-pressing operation type electronic part used in the portable telephone, for example, there is conventionally a structure in which a common elastic contact 39A and elastic contacts 39B, 39C for a signal come in contact with an electrically conductive portion arranged in a radiating shape on the surface of a radiating contact plate 38 as shown in patent literature 1 so that a rotating direction and a rotating amount of a columnar operation knob 26 are detected (see Fig. 27B).

Further, as shown in patent literature 2, there is a structure in which an insulating portion 54 and an electrically conductive portion 55 are alternately arranged at a predetermined angle pitch on the outer circumferential face of a columnar portion 40A, and a rotating direction and a rotating amount of a columnar operation knob 42 are detected by plural elastic contact legs 37 coming in contact with the insulating portion 54 and the electrically conductive portion 55 (see Fig. 27C).
Patent literature 1: JP-A-2000-251584
Patent literature 2: JP-A-2001-283685
Document US 6 194 673 discloses a device according to the preambles of claims 1 and 4.

### Disclosure of the Invention

### Problems that the Invention is to Solve

However, when compactness and a reduction in height are intended by reducing the outside diameter of the columnar operation knob 42 in e.g., the former electronic part among the above rotating-pressing operation type electronic parts, it is necessary to reduce the diameter of the radiating contact plate 38. Therefore, it is necessary to shorten the common elastic contact 39A and the elastic contacts 39B, 39C for a signal so that no sufficient spring length can be secured. As this result, when it is intended to secure a predetermined contact pressure in the above common elastic contact 39A, etc. under a situation restricted in the spring length, high size accuracy is required in thickness and width sizes of the above common elastic contact 39A, etc. so that processing becomes difficult. Accordingly, dispersion is easily caused in the size accuracy, and it is not easy to maintain contact reliability.

Similarly, when compactness and a reduction in height are intended by reducing the outside diameter of the columnar operation knob 42 in the latter electronic part, it is necessary to reduce the size of the columnar portion 40A. Therefore, no sufficient spring length can be secured in the elastic contact leg 37, and problems similar to those of the former electronic part are caused.
Further, in the latter electronic part, when the above columnar portion 40A is thinned, it becomes difficult to secure a sufficient size in the insulating portion 54, and the distance between the electrically conductive portions 55, 55 is shortened. Therefore, the elastic contact leg 37 easily comes in contact with the electrically conductive portion 55 by a vibration, etc. from the exterior, and the fear of an operation in error is high.
Further, it is necessary to structurally arrange the contact mechanism constructed by the elastic contact leg 37, etc. in the latter electronic part such that the elastic contact leg 37 comes in contact with the outer circumferential face of the columnar portion 40A projected from a side end face of the columnar operation knob 42. Therefore, when the width size of the entire electronic part is intended to be reduced, a problem exists in that the width size of the columnar operation knob 42 becomes relatively small so that operability is reduced.

In consideration of the above problems, an object of the present invention is to provide a rotating-pressing operation type electronic part able to be made compact without reducing workability, contact reliability and operability.

### Means for Solving the Problems

To achieve the above object, a rotating-pressing operation type electronic part in the present invention comprises a frame body, and a rotating operation body of a sleeve shape rotatably supported within the frame body, and detecting a rotating direction and a rotating amount by rotating the rotating operation body, and operating a push button switch by pushing down the frame body; wherein an inner contact constructed by a sleeve-shaped electric conductor and extending plural extending portions in parallel at a predetermined angle pitch from an opening edge portion along an axis is inserted into the rotating operation body and is integrated with the rotating operation body; and at least one contact piece for a rotating signal is arranged on an inner circumferential face of the extending portion so as to come in contact therewith within the inner contact; and a common contact piece of a common terminal is arranged so as to always come in contact with the inner circumferential face of the inner contact except for the extending portion.

### Effect of the Invention

In accordance with the present invention, the contact piece for a rotating signal and the common contact piece come in contact with the inner circumferential face of the inner contact. Therefore, even when the outside diameter of the rotating operation body of the electronic part of the present application is reduced and this electronic part is made compact, a sufficient spring length can be secured in the contact piece for a rotating signal and the common contact piece. Therefore, a predetermined contact pressure is easily secured and no high processing accuracy is required in the contact piece for a rotating signal. Accordingly, processing becomes easy and a reduction in contact reliability based on dispersion of size accuracy can be avoided.
Further, even when the rotating operation body is thinned, the angle pitch of the extending portion of the inner contact is comparatively increased. Accordingly, no contact piece for a rotating signal comes in contact with the extending portion by a vibration, etc. from the exterior, and no operation in error is caused.
Further, the contact piece for a rotating signal and the common contact piece are arranged within the inner contact, and no contact mechanism is arranged so as to be adjacent to a side end face of the rotating operation body as in the conventional example. Therefore, no operability is greatly damaged even when the width size of the rotating operation body of the rotating-pressing operation type electronic part in the present application invention is reduced.

As an embodiment mode, the common contact piece may be also constructed by plural elastic contact portions always coming in contact with the inner circumferential face except for the extending portion of the inner contact.
In accordance with this embodiment mode, contact reliability is improved.

As another embodiment mode, the lengths of the plural elastic contact portions arranged in the common contact piece may be also different from each other.
In accordance with this embodiment mode, contact reliability and life are extended since no plural elastic contact portions come in contact with the same portion of the inner contact.

A rotating-pressing operation type electronic part in another invention comprises a frame body, and a rotating operation body of a sleeve shape rotatably supported within the frame body, and detecting a rotating direction and a rotating amount by rotating the rotating operation body, and operating a push button switch by pushing down the frame body;
wherein an inner contact constructed by an electric conductor with a contact portion of a disk-shape and extending plural extending portions in parallel at a predetermined angle pitch from an outer circumferential edge portion of the contact portion along an axis is inserted into the rotating operation body and is integrated with the rotating operation body; and at least one contact piece for a rotating signal is arranged on an inner circumferential face of the extending portion so as to come in contact therewith within the inner contact; and a contact portion of a common terminal is arranged so as to always come in contact with an outer directional face of the contact portion of the inner contact.

In the rotating-pressing operation type electronic part in the present invention, no common contact piece is required and the structure becomes simple, and the number of parts and the number of assembly works are reduced and productivity is improved.

As an embodiment mode of the above invention, the elastic contact portions of the plural contact pieces for a rotating signal able to come in contact with the inner circumferential face of the extending portion of the inner contact may be also set to different length sizes.
In accordance with this embodiment mode, contact reliability and life are extended since two elastic contact portions do not come in contact with the same portion of the extending portion of the inner contact.

As another embodiment mode, a step portion fitted between the extending portions of the inner contact and setting the same face may be also arranged on the inner circumferential face of the rotating operation body.
In accordance with this embodiment mode, since no step difference is caused between the rotating operation body and the inner contact, the rotating operation body can be smoothly rotated and operability is improved.

As another embodiment mode, a push button switch may be also arranged on a lower face of the frame body.
In accordance with this embodiment mode, since the push button switch can be arranged in the frame body in advance, wiring of the print substrate is easily designed.

An electronic device in the present invention is constructed by the rotating-pressing operation type electronic part according to any one of claims 1 to 6; and the print substrate mounting a push button switch so as to be located just below the frame body of the rotating-pressing operation type electronic part; wherein detecting data of a rotating direction and a rotating amount of the rotating operation body are detected through the inner contact and the contact piece for a rotating signal by rotating the rotating operation body of the rotating-pressing operation type electronic part mounted to the print substrate, and the push button switch is operated by pushing down the frame body.

In accordance with the present invention, a compact electronic device easily processed and having high contact reliability and not operated in error is obtained.

Another electronic device in the present invention is constructed by the rotating-pressing operation type electronic part according to claim 7; and the print substrate able to directly electrically connect a lead terminal of the push button switch of the rotating-pressing operation type electronic part, wherein detecting data of a rotating direction and a rotating amount of the rotating operation body are detected through the inner contact and the contact piece for a rotating signal by rotating the rotating operation body of the rotating-pressing operation type electronic part mounted to the print substrate, and the push button switch is operated by pushing down the frame body.

In accordance with the present invention, in addition to the above effects, there is an effect in that an electronic device for easily designing the wiring of the print substrate is obtained.

### Brief Description of the Drawings

[Fig. 1] Fig. 1 is a perspective view of a first embodiment mode in accordance with the present invention when this first embodiment mode is applied to a portable telephone.
[Fig. 2] Fig. 2A is a perspective view of a main portion of Fig. 1, and Fig. 2B is an exploded perspective view of Fig. 2A.
[Fig. 3] Fig. 3A is a front view of Fig. 2A, and Fig. 3B is a cross-sectional view of Fig. 3A, and Fig. 3C is a left-hand side view of Fig. 2A, and Fig. 3D is a cross-sectional view of Fig. 3C.
[Fig. 4] Fig. 4A is a perspective view of a rotating-pressing operation type electronic part in accordance with the first embodiment mode, and Fig. 4B is a perspective view of an angle different from that of Fig. 4A.
[Fig. 5] Fig. 5A is a plan view of the first embodiment mode removing a rotating operation body for reasons of convenience, and Fig. 5B is a perspective view of Fig. 5A.
[Fig. 6] Fig. 6 is an exploded perspective view of the first embodiment mode shown in Fig. 4A.
[Fig. 7] Fig. 7 is a perspective view for explaining the former half of an assembly process of the first embodiment mode.
[Fig. 8] Fig. 8 is a perspective view for explaining the latter half of the assembly process of the first embodiment mode.
[Fig. 9] Fig. 9A is a plan sectional view for explaining a contact structure of the first embodiment mode, and Fig. 9B is a perspective view for explaining the contact structure of the first embodiment mode.
[Fig. 10] Figs. 10A, 10B and 10C are a front sectional view, a side sectional view and a sectional perspective view of a rotating operation body in the first embodiment mode.
[Fig. 11] Fig. 11 is an exploded perspective view of a rotating-pressing operation type electronic part in accordance with a second embodiment mode.
[Fig. 12] Fig. 12 is a perspective view for explaining the former half of an assembly process of the second embodiment mode.
[Fig. 13] Fig. 13 is a perspective view for explaining the latter half of the assembly process of the second embodiment mode.
[Fig. 14] Fig. 14A is a plan view of the second embodiment mode removing a rotating operation body for reasons of convenience, and Fig. 14B is a perspective view of Fig. 14A.
[Fig. 15] Figs. 15A and 15B are a plan sectional view and a perspective view of a contact structure in the second embodiment mode.
[Fig. 16] Figs. 16A, 16B and 16C are a front sectional view, a side sectional view and a sectional perspective view of the rotating operation body in the second embodiment mode.
[Fig. 17] Fig. 17 is a perspective view of a rotating-pressing operation type electronic part in accordance with a third embodiment mode.
[Fig. 18] Figs. 18A, 18B and 18C are a plan view, a front view and a right-hand side sectional view showing a case in which the rotating-pressing operation type electronic part of the third embodiment mode is mounted to a print substrate.
[Fig. 19] Figs. 19A and 19B are perspective views of a rotating-pressing operation type electronic part in accordance with a fourth embodiment mode when this rotating-pressing operation type electronic part is visually seen from a different angle.
[Fig. 20] Fig. 20A is a perspective view of the fourth embodiment mode removing a rotating operation body for reasons of convenience, and Fig. 20B is a plan view of Fig. 20A.
[Fig. 21] Fig. 21 is a perspective view of the rotating-pressing operation type electronic part in accordance with the fourth embodiment mode.
[Fig. 22] Figs. 22A and 22B are perspective views of a rotating-pressing operation type electronic part in accordance with a fifth embodiment mode when this rotating-pressing operation type electronic part is visually seen from a different angle.
[Fig. 23] Fig. 23A is a perspective view of the fifth embodiment mode removing a rotating operation body for reasons of convenience, and Fig. 23B is a plan view of Fig. 23A.
[Fig. 24] Fig. 24 is an exploded perspective view of the rotating-pressing operation type electronic part in accordance with the fifth embodiment mode.
[Fig. 25] Fig. 25A is a perspective view of a rotating-pressing operation type electronic part in accordance with a sixth embodiment mode, and Fig. 25B is an exploded perspective view for explaining a mounting method of the rotating-pressing operation type electronic part of the sixth embodiment mode with respect to a print substrate.
[Fig. 26] Fig. 26A is a perspective view showing a mounting state of the sixth embodiment mode, and Fig. 26B is a front view of Fig. 26A, and Fig. 26C is a right-hand side view of Fig. 26A, and Fig. 26D is a right-hand side sectional view of Fig. 26A.
[Fig. 27] Fig. 27A is a schematic sectional view showing a contact mechanism in the present application invention.
Figs. 27B and 27C are schematic sectional views showing a contact mechanism in a conventional example.

### Description of the Reference Numerals and Signs

10: rotating-pressing operation type electronic part
20: first base
21: push-down pin
22: shaft portion
30, 35: first and second contact pieces
31, 36: elastic contact portion
32, 37: connecting portion
33, 38: terminal portion
40: cover for escape prevention
45: spring for an operating feel
50: common contact piece
51, 52: elastic contact portion
53: tongue piece
54: common terminal
55: tongue piece
56, 58: connecting portion
57, 59: terminal portion
60: rotating operation body
61: rotating operation portion
62, 63: pressing operation portion
64: projecting stripe
65: step portion
70: inner contact
71: extending portion
72: contact portion
80: second base
81: push-down pin
82: bearing portion
83, 84: arm portion
85, 86: guide pin
100: portable telephone
107: monitor
110: print substrate
111a, 111b: push button switch
112a, 112b, 112c: connecting pad
113a, 113b, 113c: connecting pad
114a, 114b: positioning hole

### Best Mode for Carrying Out the Invention

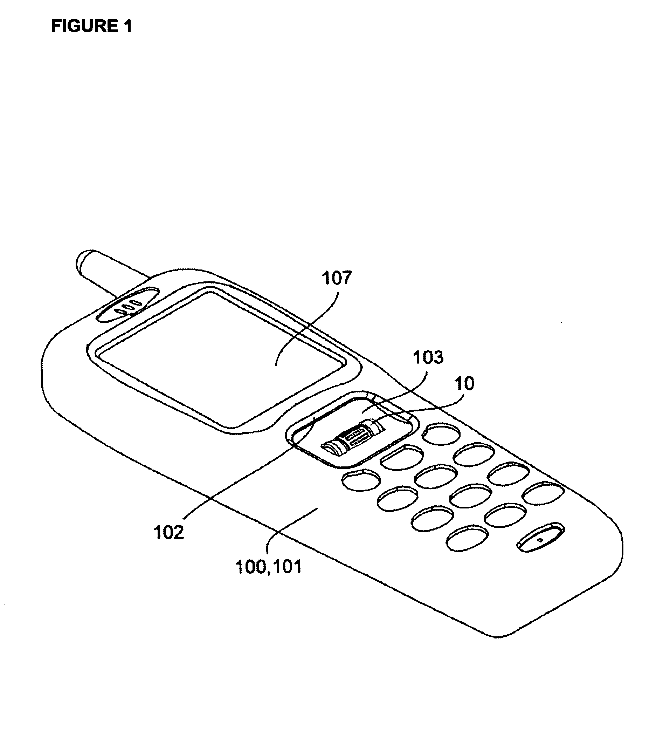

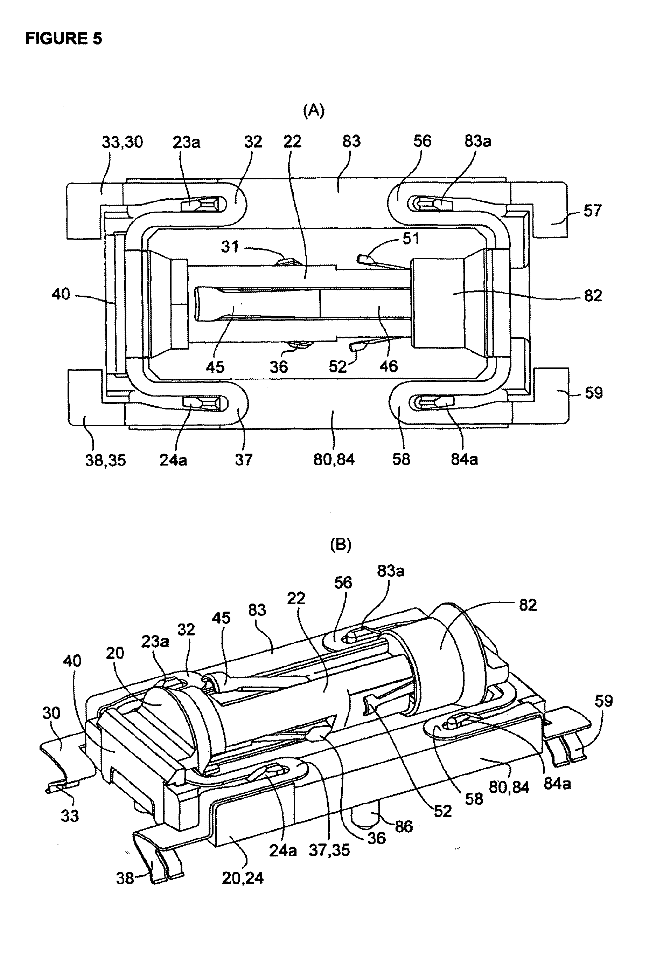

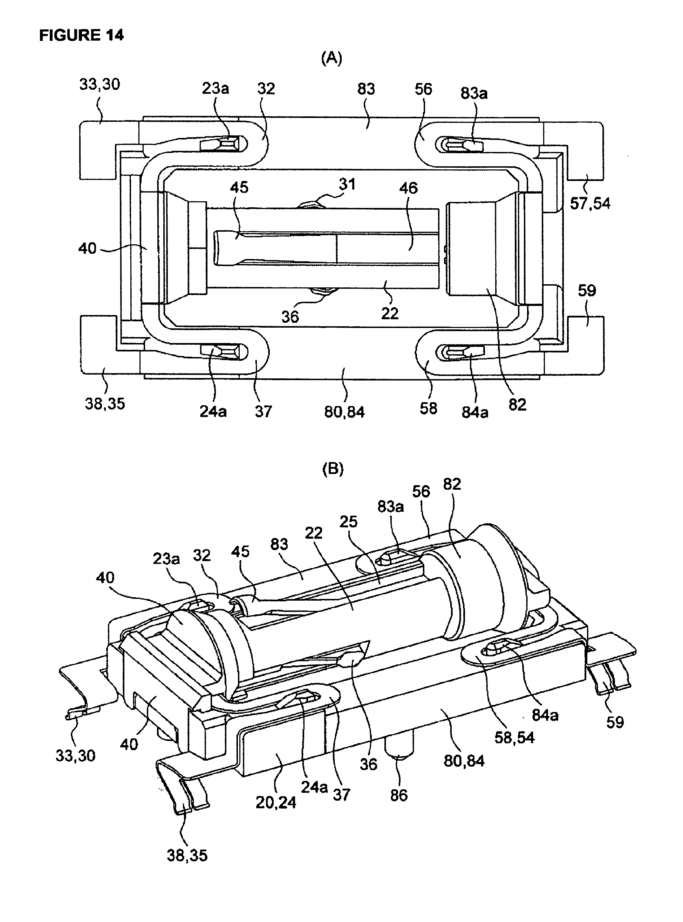

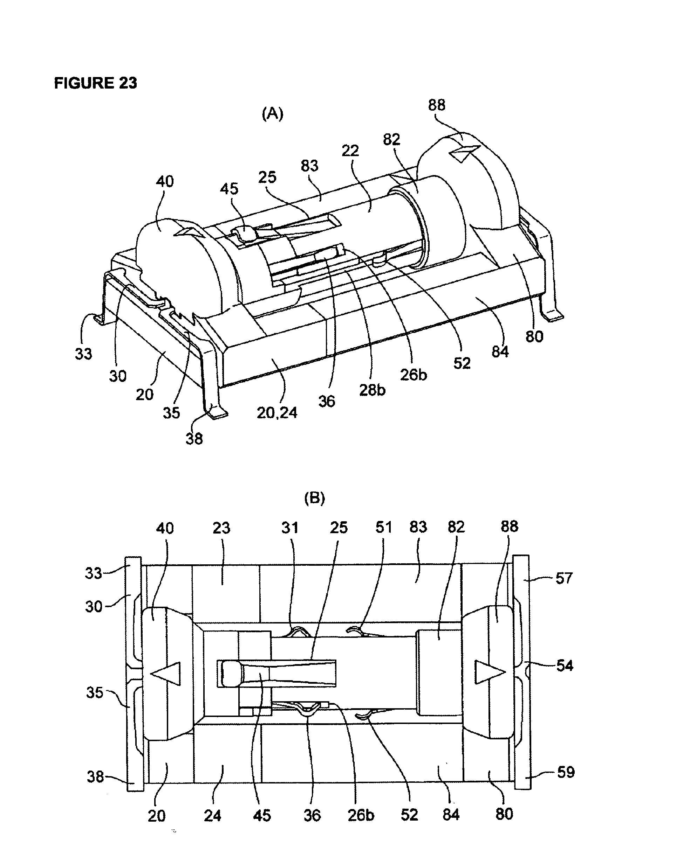

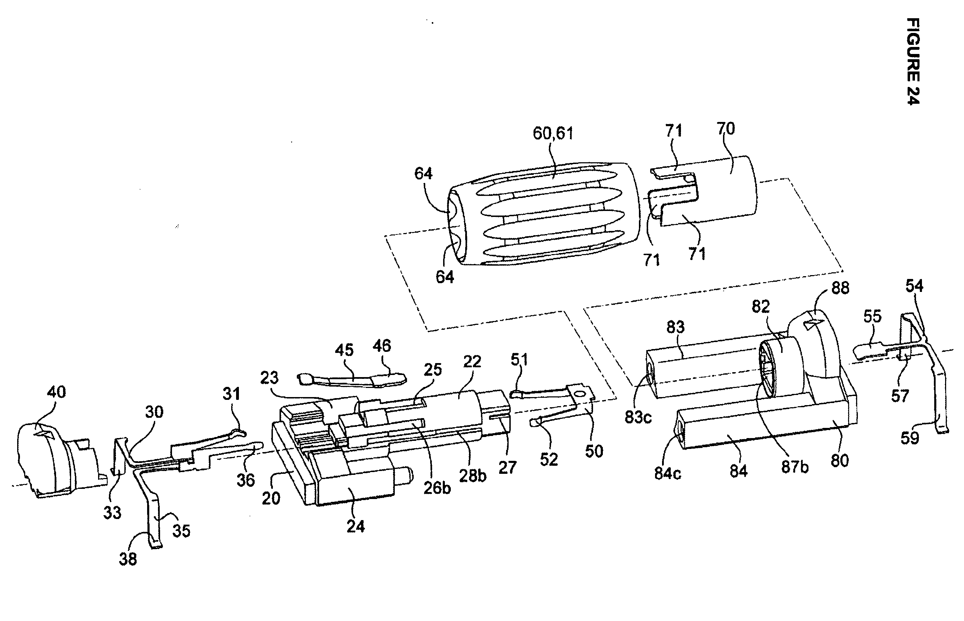

Embodiment modes in accordance with the present invention will be explained in accordance with the accompanying drawings of Figs. 1 to 27.
As shown in Figs. 1 to 10, a first embodiment mode shows a case applied to a rotating-pressing operation type electronic part 10 of a portable telephone 100.

In the above portable telephone 100, the above rotating-pressing operation type electronic part 10 is pressed against the surface of a print substrate 110 stored into a housing 101 of the portable telephone 100 and is prevented in escape by fitting a cover 103 to an opening portion 102 of this housing 101. The above cover 103 has a rectangular opening portion 104 into which a rotating operation body 60 of the above rotating-pressing operation type electronic part 10 is fitted. Each of pairs of partition walls 105, 106 is projected so as to regulate the position of the above rotating-pressing operation type electronic part 10 from a lower face edge portion of this opening portion 104. In particular, the above partition walls 105 push down terminal portions 33, 38 of contact pieces 30, 35 and terminal portions 57, 59 of a common contact piece 54 described later so that these terminal portions respectively come in press contact with connecting pads 112a, 112b and 113a, 113b of the print substrate 110 and are electrically connected to these connecting pads.
An unillustrated scroll bar is moved by operating the above rotating-pressing operation type electronic part 10 until predetermined desirable information data among information data displayed within the above monitor 107. Next, the predetermined desirable information data can be selected by pushing-down the above rotating-pressing operation type electronic part 10.

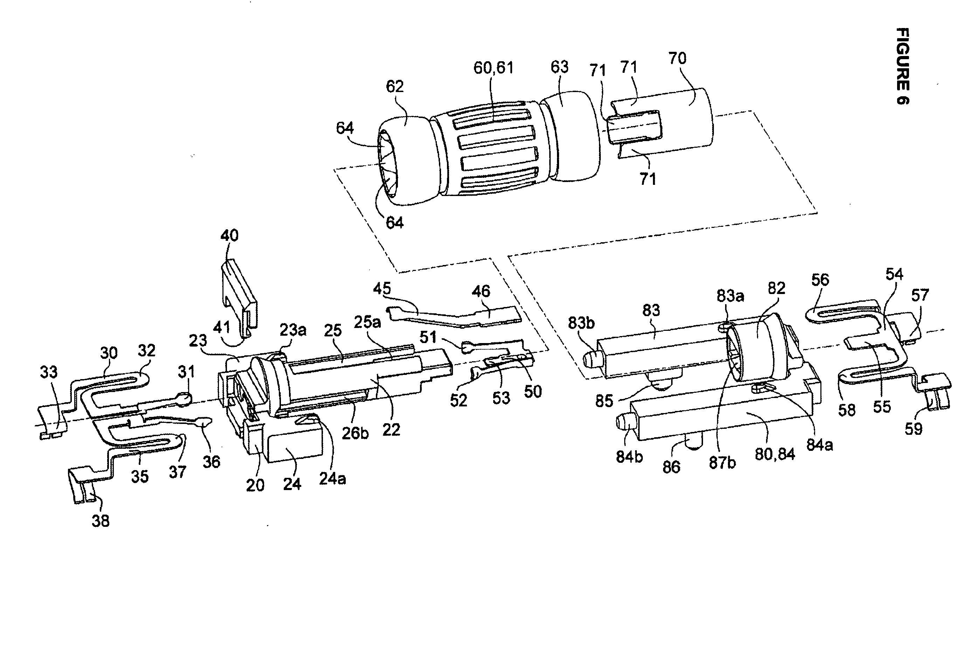

As shown in Fig. 6, the above rotating-pressing operation type electronic part 10 is generally constructed by a first base 20, a rotating operation body 60 and a second base 80. First and second contact pieces 30, 35 for a rotating signal, a cover 40 for escape prevention, a spring 45 for an operating feel, and a common contact piece 50 for a rotating signal are assembled into the first base 20. A sleeve-shaped inner contact 70 is press-fitted into the rotating operation body 60. The common contact piece 54 for a rotating signal is assembled into the second base 80.

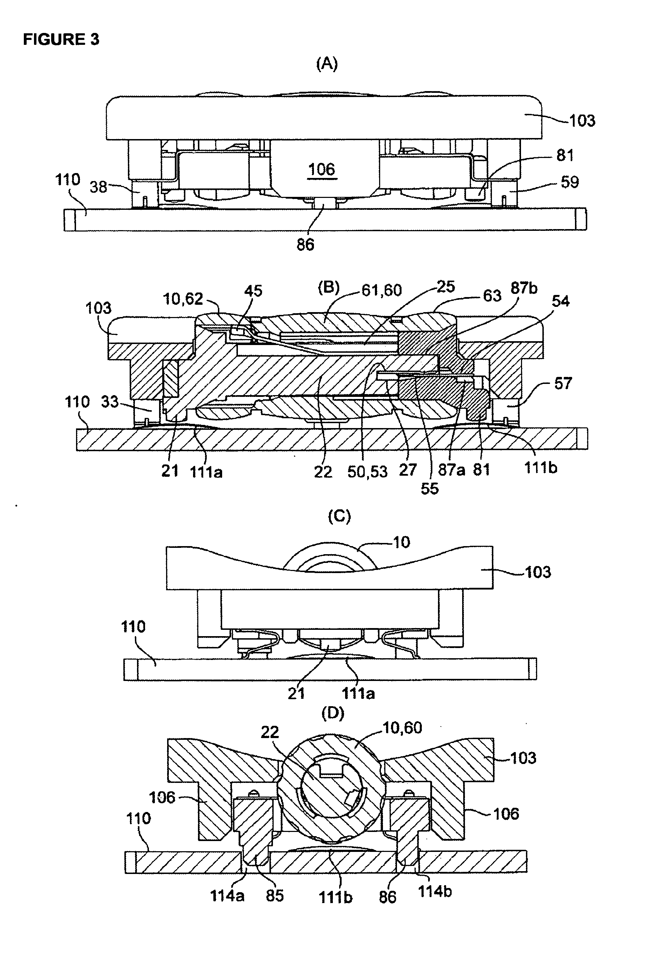

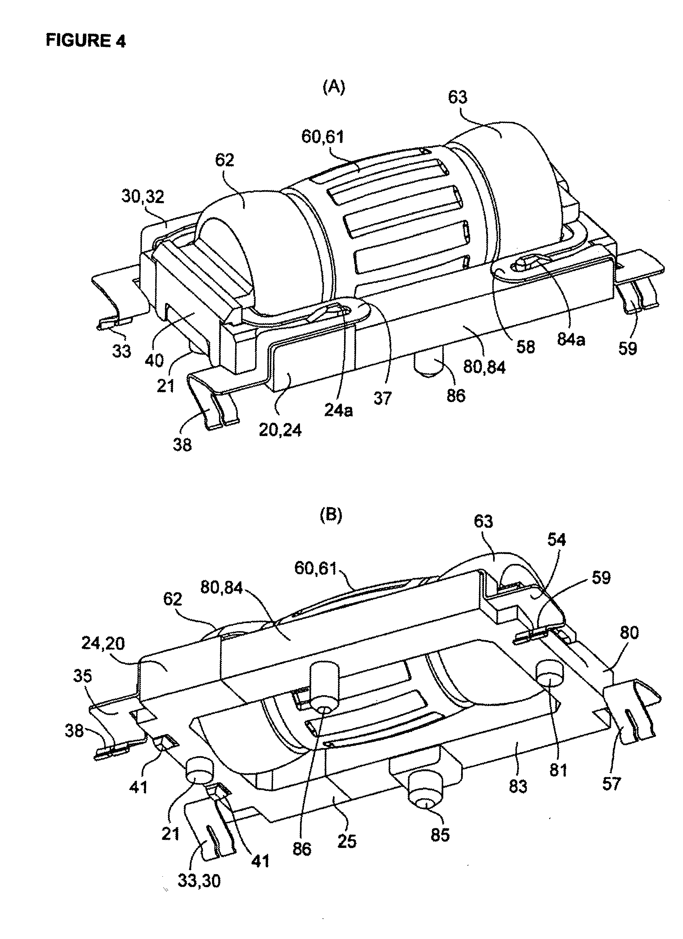

A push-down pin 21 (Fig. 4B) is projected on the lower face of the first base 20. Arm receiving portions 23, 24 are projected in parallel on both sides of a shaft portion 22 projected in a side direction of the first base 20. The above shaft portion 22 forms a guide groove 25 for press-fitting and fixing the spring 45 for an operating feel at the upper end of an outer circumferential face of the shaft portion 22. The shaft portion 22 also respectively forms guide grooves 26a, 26b (guide groove 26a is not shown in the drawings) for guiding elastic contact portions 31, 36 of the first and second contact pieces 30, 35 for a rotating signal on both side faces of the outer circumferential face of the shaft portion 22. Further, a press-fitting groove 27 (see Fig. 3B) able to press-fit the common contact piece for a rotating signal is formed on a tip face of the above shaft portion 22. On the other hand, positioning projections 23a, 24a are respectively formed in upper face tip edge portions of the above arm receiving portions 23, 24.

The above first and second contact pieces 30, 35 for a rotating signal mutually have a left-right symmetrical shape, and is constructed by elastic contact portions 31, 36 coming in slide contact with the inner circumferential face of an inner contact 70 described later, connecting portions 32, 37 for obtaining a predetermined desirable spring force, and terminal portions 33, 38 coming in elastic contact with connecting pads 112a, 112b of the print substrate 110. In particular, the above terminal portions 33, 38 are bent approximately in a V-shape at their free ends, and are divided into two portions. This is because the predetermined desirable spring force is secured and contact reliability is secured. The lengths of the above elastic contact portions 31, 36 are differently set so as not to come in contact with the same portion of the inner circumferential face of an extending portion 71 of the inner contact 70. Further, tip portions of the above elastic contact portions 31, 36 are curved to secure smooth operability. Further, the tip portions of the above elastic contact portions 31, 36 may be also divided into plural pieces to raise contact reliability.

The above cover 40 for escape prevention is arranged to prevent upward floating of the above first and second contact pieces 30, 35 inserted into the first base 20, and prevent escape of the first and second contact pieces 30, 35. Therefore, the above cover 40 prevents the escape of the above first and second contact pieces 30, 35 by engaging a pair of engaging claws 41, 42 arranged in a lower end portion of the cover 40 with a lower face edge portion of the above first base 20.

The spring 45 for an operating feel gives a click feeling to an operator by abutting on a projecting stripe 64 arranged in an inner circumferential face opening edge portion of the rotating operation body 60 described later. The above spring 45 is attached by press-fitting a wide width portion 46 arranged in one end portion into a slit 25a (Fig. 6) communicating with the above guide groove 25 from a side direction.

The common contact piece 50 for a rotating signal has a pair of elastic contact portions 51, 52 always coming in contact with the inner circumferential face of the inner contact 70 described later, and also has a tongue piece 53 for press-fitting able to be press-fitted into a slit 27 arranged on a tip face of the above shaft portion 22. The lengths of the above elastic contact portions 51, 52 are differently set so as not to come in contact with the same portion of the inner circumferential face of the above inner contact 70. Further, tip portions of the above elastic contact portions 31, 36 are curved to secure smooth operability. Further, the tip portions of the above elastic contact portions 31, 36 may be also divided into plural pieces to raise contact reliability.

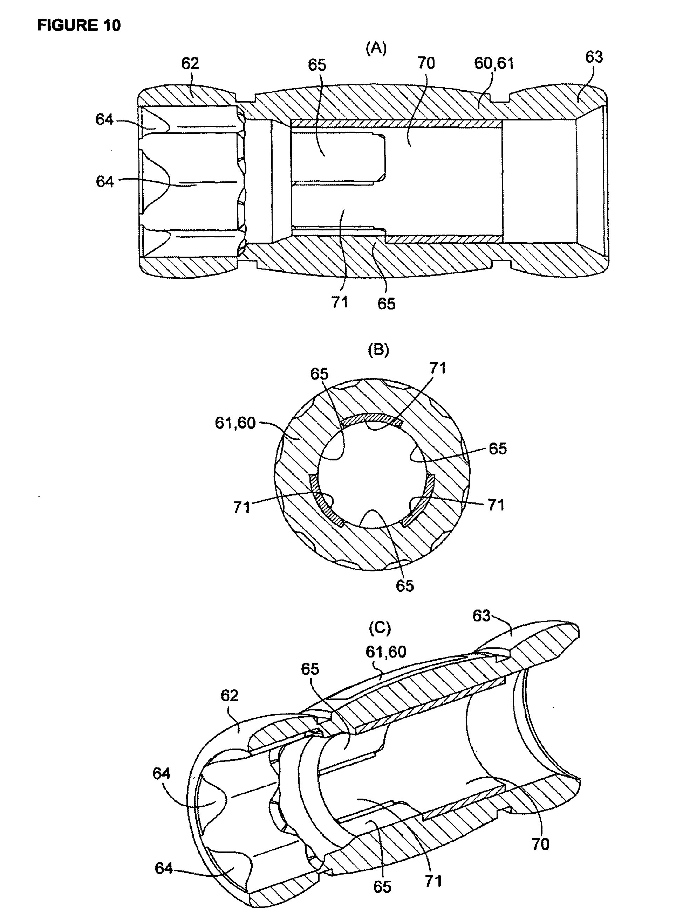

The rotating operation body 60 is a sleeve body able to be inserted into the shaft portion 22 of the above first base 20. As shown in Fig. 10, a rotating operation portion 61 having irregular faces is formed in the central portion of an outer circumferential face of the rotating operation body 60. Pressing operation portions 62, 63 are respectively formed on both sides of the above rotating operation portion 61. Further, in the above rotating operation body 60, a projecting stripe 64 for obtaining a click feeling is formed in a one-side edge portion of the inner circumferential face of the rotating operation body 60. A step portion 65 is formed at a predetermined pitch in an intermediate portion of the inner circumferential face of the rotating operation body 60 (Fig. 10).

The inner contact 70 is constructed by a sleeve-shaped electric conductor, and an extending portion 71 is projected from a one-side edge portion of the inner contact 70 at a predetermined pitch in parallel with the axis.
The above step portion 65 is located between the above extending portions 71 by press-fitting to the inner circumferential face of the above rotating operation body 60, and the inner circumferential face of the extending portion 71 becomes the same face as the above step portion 65 so that no step difference is caused (Fig. 10B)

A push-down pin 81 (Fig. 4B) is projected on the lower face of the second base 80. On the other hand, a bearing portion 82 is integrally formed in the second base 80 so as to correspond to the above shaft portion 22. A pair of arm portions 83, 84 are projected in a side direction so as to respectively correspond to the arm receiving portions 23, 24 of the above first base 20. In the above arm portions 83, 84, positioning projections 83a, 84a are formed in an upper face base portion. Further, projecting portions 83b, 84b for fitting are formed on tip faces of the arm portions 83, 84. Further, a guide pin 85 with a pedestal is projected on the lower face of the above arm portion 83, and a guide pin 86 is projected on the lower face of the above arm portion 84. A slit 87a (Fig. 3B) able to press-fit a tongue piece 55 for connection in the common terminal 54 for a rotating signal is arranged on an outer directional face of the above bearing portion 82. On the other hand, a fitting hole 87b for fitting the above shaft portion 22 thereinto and communicating with the above slit 87a is arranged on an inner directional face of the bearing portion 82.

The above common terminal 54 for a rotating signal is constructed by a tongue piece 55 for connection, a pair of connecting portions 56, 58, and terminal portions 57, 59. The tongue piece 55 for connection comes in press contact with the above common contact piece 50 for a rotating signal, and is electrically connected to this common contact piece 50. The connecting portions 56, 58 extend from a base portion of this tongue piece 55 for connection. In the terminal portions 57, 59, free end portions of these connecting portions 56, 58 are approximately bent in a V-shape, and their tip portions are divided into two portions.

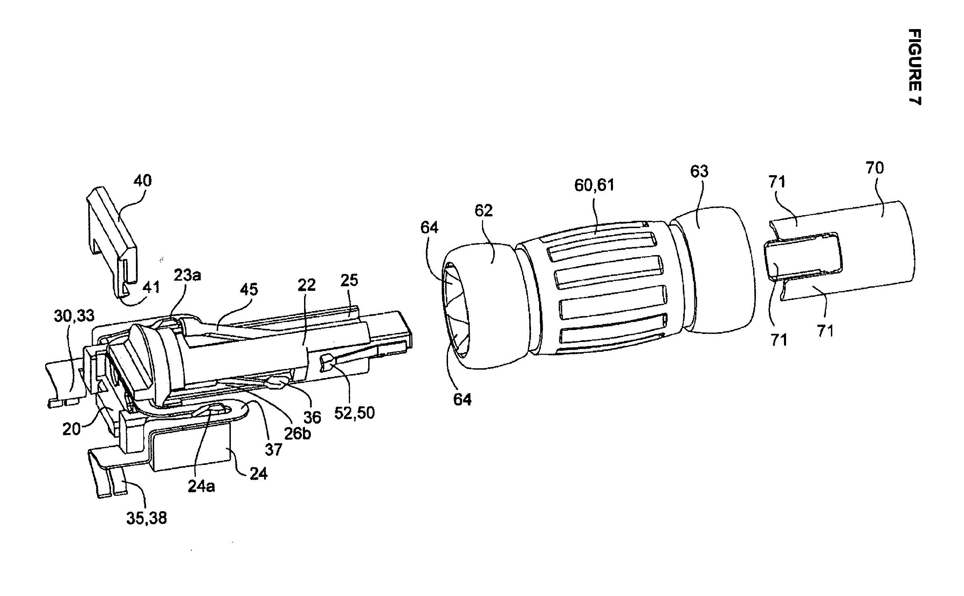

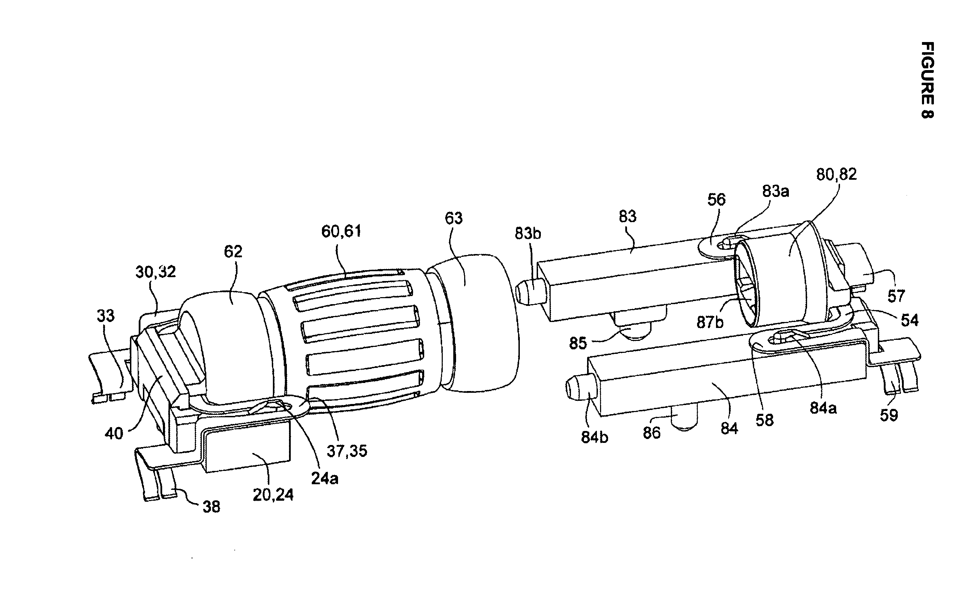

An assembly method of the rotating-pressing operation type electronic part 10 constructed by the above constructional parts will next be explained on the basis of Figs. 7 and 8.
The elastic contact portions 31, 36 of the first and second contact pieces 30, 35 for a rotating signal are respectively inserted into the guide grooves 26a, 26b arranged on both sides of the outer circumferential face of the shaft portion 22 of the first base 20. The connecting portions 32, 37 are respectively engaged with the positioning projections 23a, 24a of the arm receiving portions 23, 24, and are positioned. Further, the wide width portion 46 of the spring 45 for an operating feel is press-fitted into the slit 25a of the guide groove 25 of the above shaft portion 22. The tongue piece 53 of the common contact piece 50 for a rotating signal is press-fitted and assembled into the slit 27 (Fig. 3B) of the above shaft portion 22. Next, the engaging claw 41 of the cover 40 for escape prevention is engaged with a lower face edge portion of the above first base 20 and is assembled so that escape of the common contact pieces 30, 35 for a rotating signal is prevented.

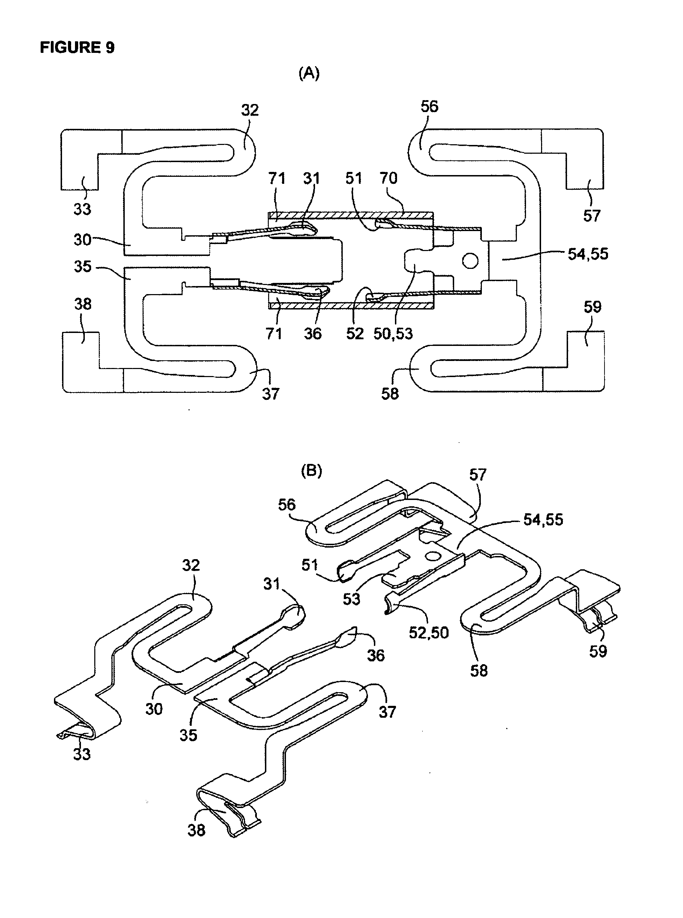

Further, the shaft portion 22 of the first base 20 is inserted and assembled into the rotating operation body 60 press-fitting the inner contact 70 thereinto. Thus, the elastic contact portions 31, 36 of the first and second contact pieces 30, 35 for a rotating signal can respectively come in contact with the inner circumferential face of the extending portion 71 of the above inner contact 70. Further, the elastic contact portions 51, 52 of the above common contact piece 50 respectively always come in contact with a continuous inner circumferential face of the above inner contact 70 (Figs. 9B and 27A). Further, the spring 45 for an operating feel can abut on the projecting stripe 64 of the rotating operation body 60.

On the other hand, the connecting tongue piece 55 of the above common terminal 54 for a rotating signal is press-fitted into the bearing portion 82 of the second base 80, and the connecting portions 56, 58 are engaged with the positioning projections 83a, 84a of the arm portions 83, 84, and are assembled. The above bearing portion 82 is then inserted from an opening portion of one side of the rotating operation body 60, and the shaft portion 22 of the first base 20 is fitted into the fitting hole 87b of the bearing portion 82. Further, the projecting portions 83b, 84b for fitting in the arm portions 83, 84 are inserted into unillustrated fitting holes of the arm receiving portions 23, 24 of the first base 20, and are integrated. Therefore, the tongue piece 55 of the common terminal 54 comes in press contact with the common contact piece 50, and is electrically connected to this common contact piece 50 (Fig. 3B), and the above rotating operation body 60 is rotatably supported.

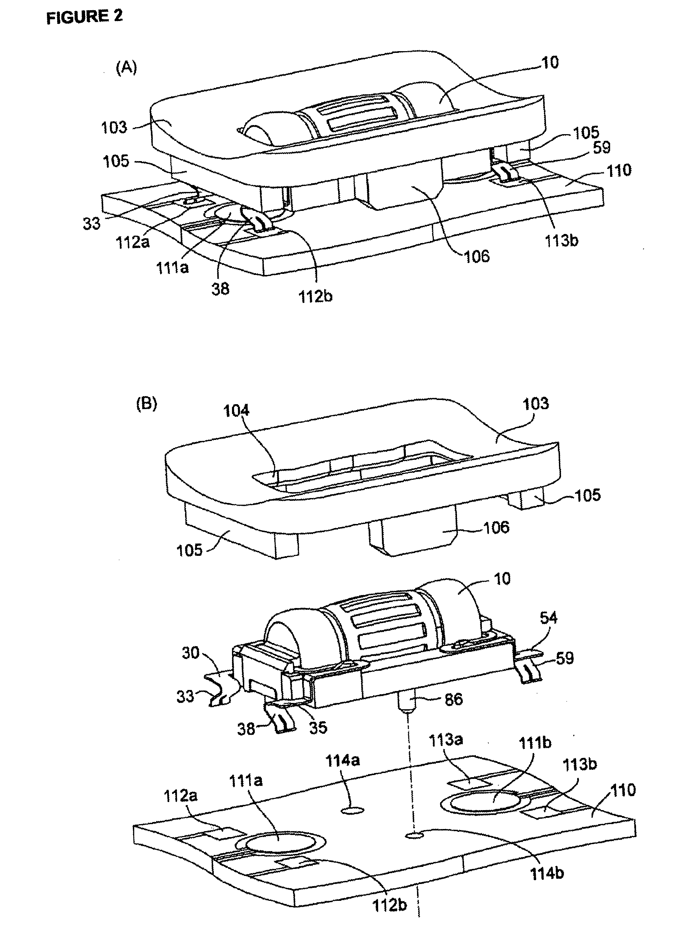

As shown in Fig. 2, positioning pins 85, 86 of the second base 80 are respectively inserted into positioning holes 114a, 114b of the print substrate 110 attached into the portable telephone 100, and are positioned. Thus, push-down pins 21, 81 of the second base 80 respectively abut on push button switches 111a, 111b. Further, escape of the rotating-pressing operation type electronic part 10 is prevented by fitting the cover 103 into the opening portion 102 arranged in the housing 101 of the above portable telephone 100.

Next, the operation of the rotating-pressing operation type electronic part 10 assembled as mentioned above will be explained.
The elastic contact portions 51, 52 of the common contact piece 50 always come in contact with the inner contact 70. Each of the elastic contact portions 31, 36 of the first and second contact pieces 30, 35 for a rotating signal alternately repeats a contact state and a non-contact state with respect to the extending portion 71 of the above inner contact 70 by rotating the rotating operation body 60. Therefore, a rotating direction and a rotating amount of the above rotating operation body 60 can be detected by respectively outputting pulse signals when the contact state is attained. Next, detected data are converted through an unillustrated control circuit, and a detecting result is displayed as a movement of a scroll bar in the monitor 107 of the portable telephone 100. After predetermined desirable data are specified by the scroll bar, the rotating operation portion 61 of the rotating operation body 60 or the pressing operation portions 62, 63 are pushed down. Thus, the push button switches 111a, 111b mounted to the print substrate 110 are operated through the push-down pins 21, 81, and the predetermined desirable information data displayed in the monitor 107 are selected. Thereafter, the predetermined desirable information data can be selected and determined by moving the scroll bar displayed in the monitor 107 by repeating similar operations.

In accordance with this embodiment mode, the terminal portions 33, 38 of the first and second contact pieces for a rotating signal and the terminal portions 57, 59 of the common terminal 54 respectively come in direct contact with the connecting pads 112a, 112b and 113a, 113b of the print substrate 110. Therefore, the rotating-pressing operation type electronic part 10 having a small number of parts and a small number of assembly works and having a small height size is obtained. Since the base portion and the attaching plate as in the conventional example are not particularly required, the rotating-pressing operation type electronic part 10 having a small floor area is obtained. As this result, there is an advantage able to raise the integration density of other electronic parts in the print substrate 110.

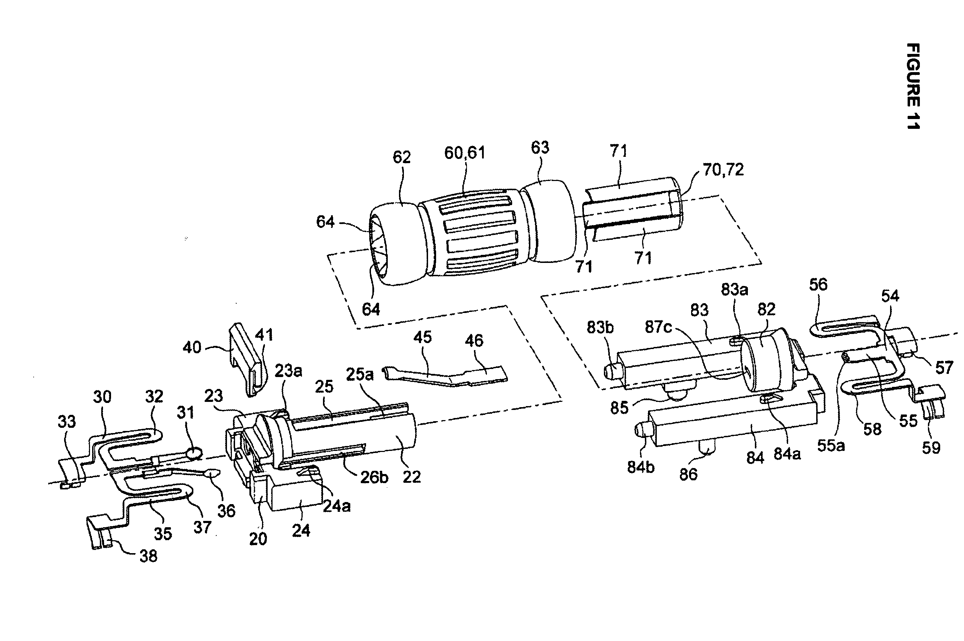

As shown in Figs. 11 to 16, a second embodiment mode shows a case in which the common terminal 54 comes in direct contact with the inner contact 70.
Namely, in the inner contact 70, an extending portion 71 is projected at a predetermined pitch from an outer circumferential edge portion of a contact portion 72 of a disk shape in parallel with the axis. On the other hand, elastic contact portions 55a, 55a are formed in eccentric positions in a tip edge portion of the tongue piece 55 of the common terminal 54.

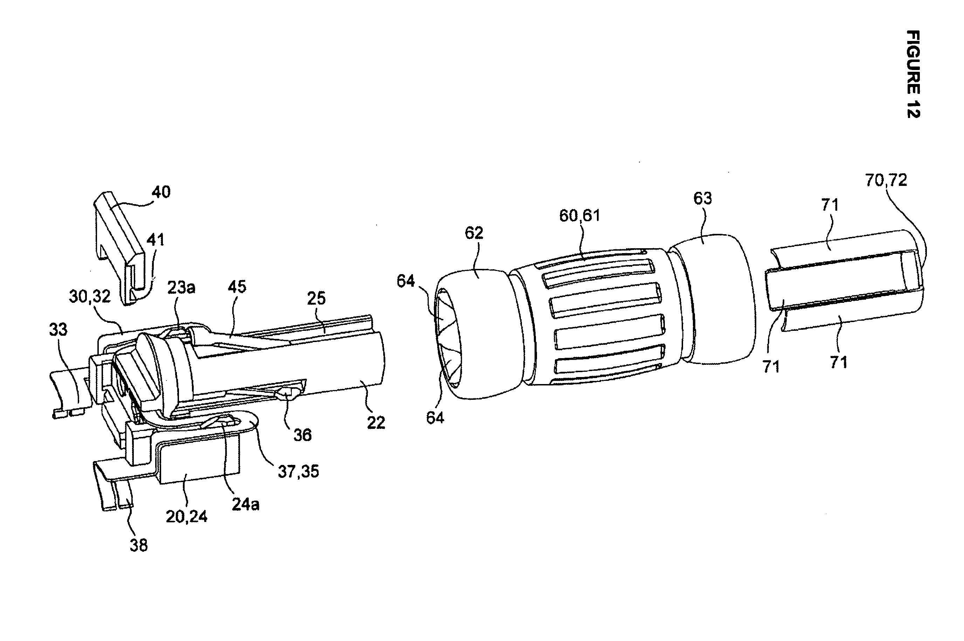

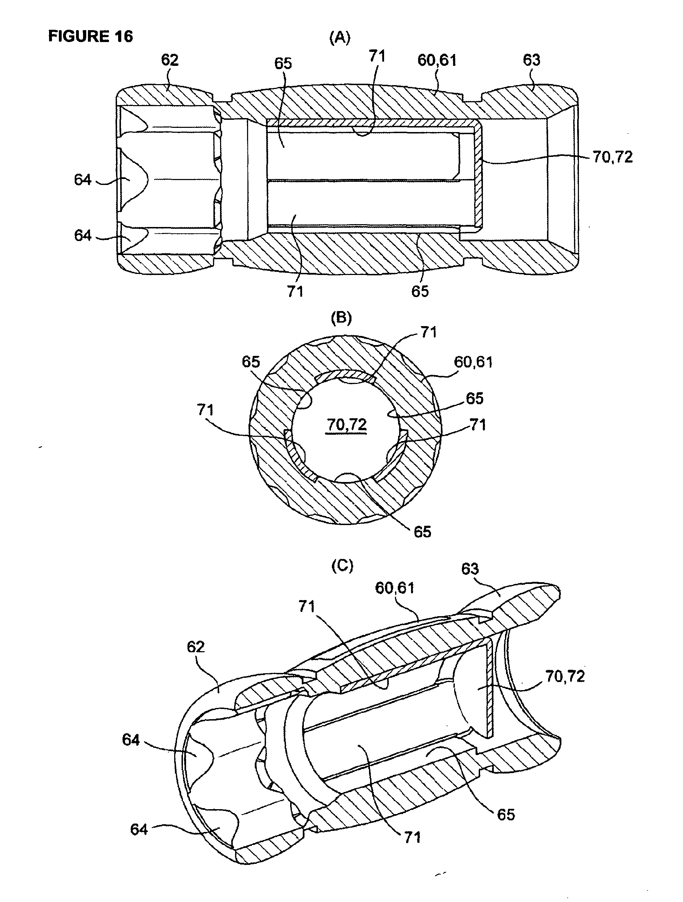

Therefore, similar to the above first embodiment mode, as shown in Fig. 12, the shaft portion 22 of the first base 20 is inserted and assembled into the rotating operation body 60 (Fig. 16) press-fitting the inner contact 70 thereinto. Thus, the elastic contact portions 31, 36 of the first and second contact pieces 30, 35 for a rotating signal respectively come in contact with an inner circumferential face of the extending portion 71 of the above inner contact 70.

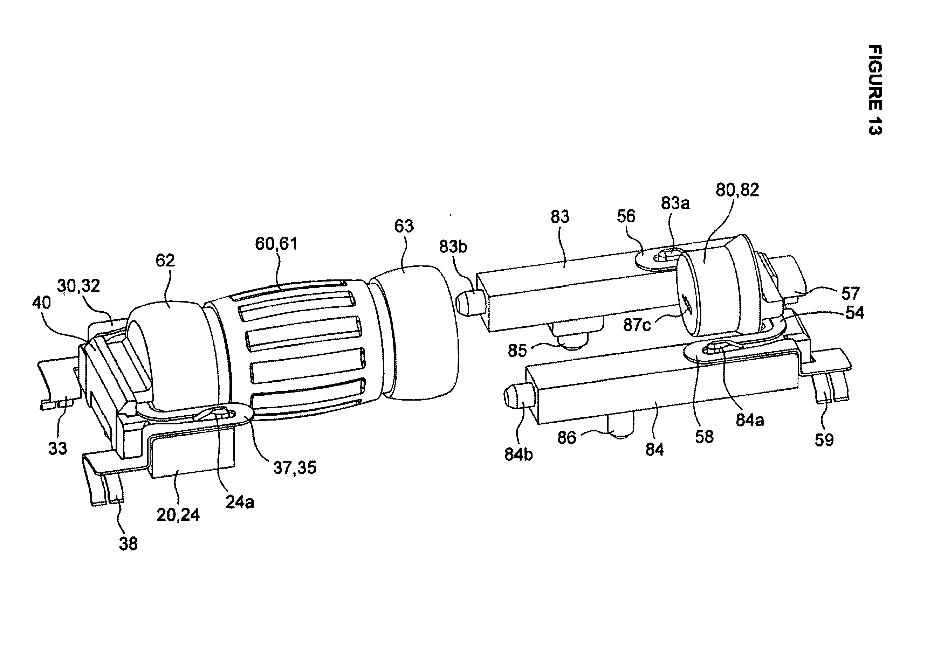

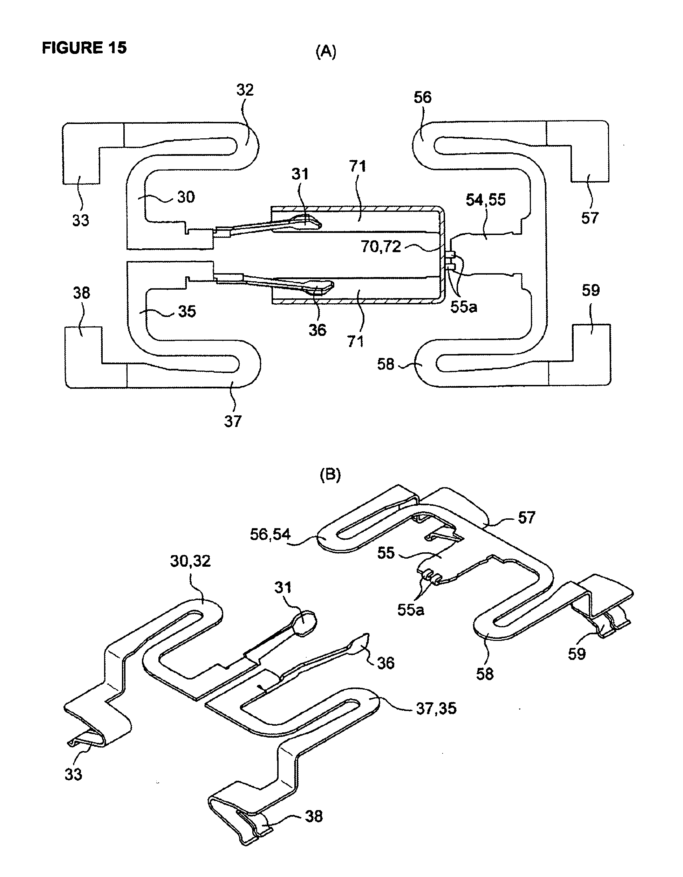

On the other hand, as shown in Fig. 13, a connecting tongue piece 55 of the above common terminal 54 for a rotating signal is press-fitted into a press-fitting hole 87c of the bearing portion 82 of the second base 80. Further, connecting portions 56, 58 are engaged with positioning projections 83a, 84a of the arm portions 83, 84, and are assembled. The above bearing portion 82 is then inserted from an opening portion of one side of the rotating operation body 60. Projecting portions 83b, 84b for fitting in the arm portions 83, 84 are inserted into unillustrated fitting holes of the arm receiving portions 23, 24 of the first base 20, and are integrated, and the above rotating operation body 60 is rotatably supported. Therefore, the elastic contact portions 55a, 55a arranged in the tongue piece 55 of the common terminal 54 come in contact with a contact portion 72 of the above inner contact 70 (Fig. 15A).
In accordance with this embodiment, there are advantages in that the above common contact piece 50 is not required, and the number of parts and the number of assembly works are reduced and productivity is further improved.
Since the other portions are approximately similar to those of the first embodiment mode, their explanations are omitted.

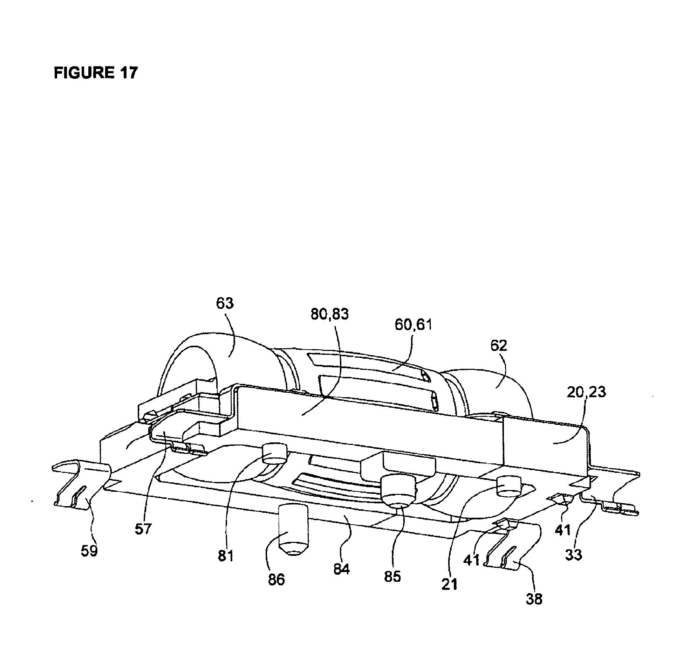

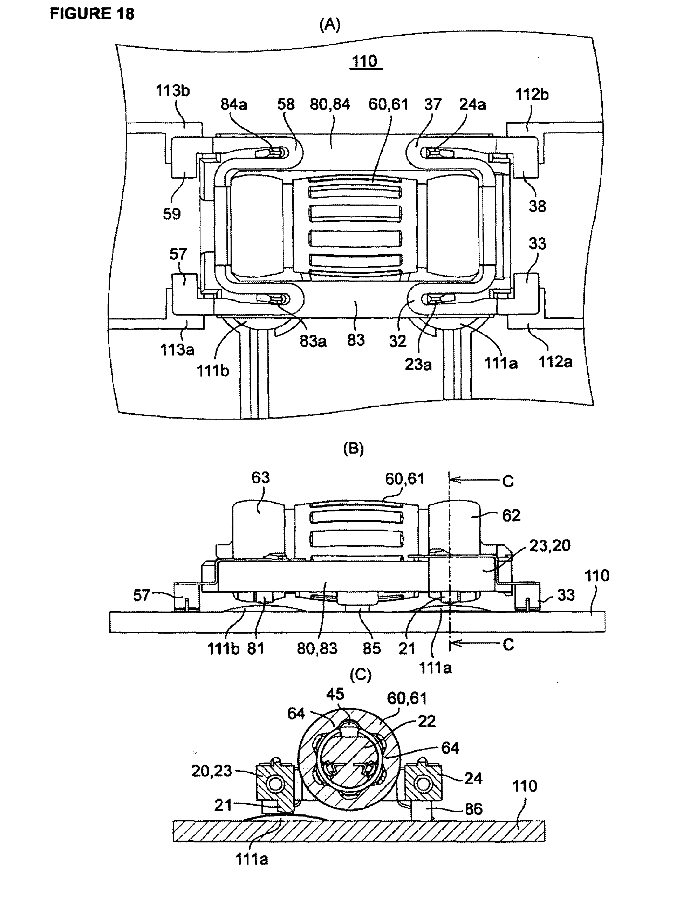

As shown in Figs. 17 and 18, a third embodiment mode shows a case in which push-down pins 21 and 81 are respectively projected on the lower faces of an arm receiving portion 23 of the first base 20 and an arm portion 83 of the second base 80.
In accordance with this embodiment mode, since the push-down pins 21, 81 are arranged on the side opposed to an operator's hand, there are advantages in that the operator easily turns on and off the push button switches 111a, 111b by one thumb and operability is improved. Since the other portions are similar to those of the above first embodiment mode, their explanations are omitted.

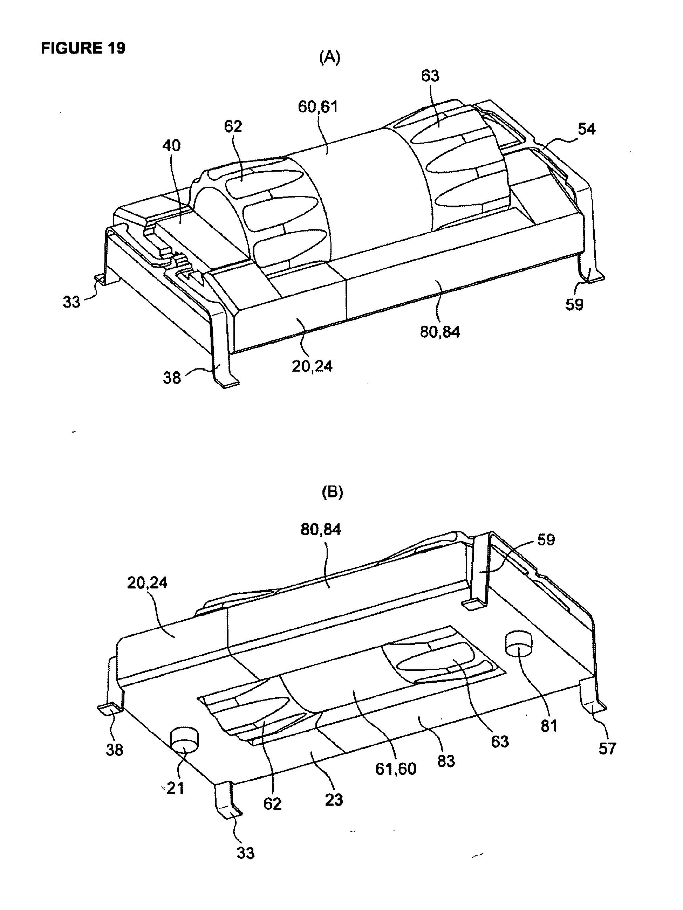

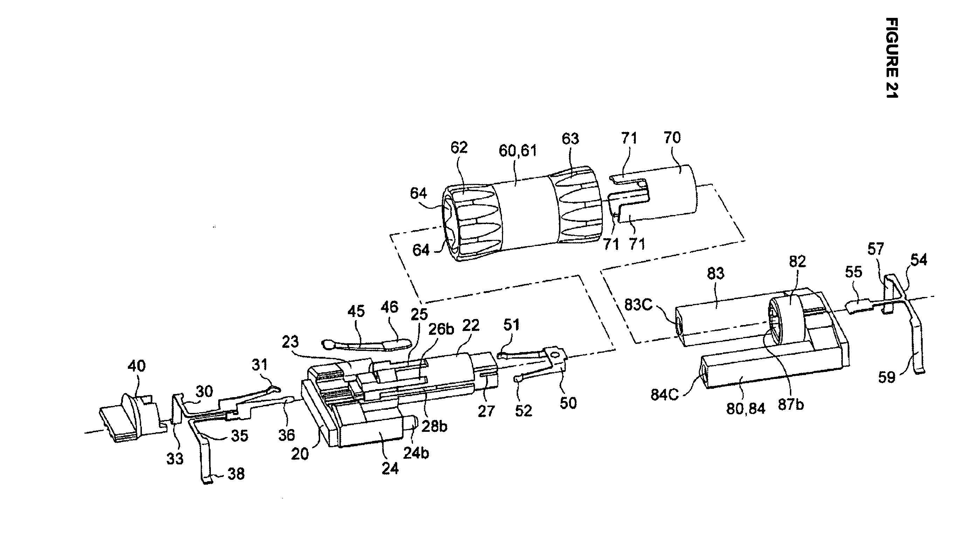

As shown in Figs. 19 to 21, a fourth embodiment mode shows a case used by soldering onto the surface of the print substrate 110. Points greatly different from the above first embodiment mode will be explained.
Namely, in the first base 20, as shown in Fig. 21, arm receiving portions 23, 24 are projected in parallel on both sides of the shaft portion 22 projected in a side direction. A guide groove 25 for press-fitting and fixing the spring 45 for an operating feel is formed at an outer circumferential face upper end of the above shaft portion 22. Guide grooves 26a, 26b (guide groove 26a is not shown in the drawings) for guiding the contact portions 31, 36 of the first and second contact pieces 30, 35 for a rotating signal are respectively formed on both sides of the above guide groove 25. Further, a press-fitting groove 27 able to press-fit the common contact piece 50 for a rotating signal is formed on a tip face of the above shaft portion 22. Guide grooves 28a, 28b (guide groove 28a is not shown in the drawings) for guiding the elastic contact portions 51, 52 of the common contact piece 50 are arranged on both sides of the outer circumferential face of the shaft portion 22. On the other hand, no positioning projection is arranged in upper face edge portions of the above arm receiving portions 23, 24, but projecting portions 23b, 24b for fitting (no projecting portion 23b for fitting is shown in the drawings) are projected on tip faces of the arm receiving portions 23, 24.

The above first and second contact pieces 30, 35 for a rotating signal mutually have a left-right symmetrical shape, and are constructed by elastic contact portions 31, 36 coming in slide contact with the inner circumferential face of an inner contact 70 described later, and terminal portions 33, 38 for soldering to the connecting pads 112a, 112b of the print substrate 110. The lengths of the above elastic contact portions 31, 36 are differently set so as not to come in contact with the same portion of the inner circumferential face of an extending portion of the inner contact 70.

Upward floating of the above first and second contact pieces 30, 35 is prevented and escape is prevented by inserting and fixing the above cover 40 for escape prevention from a side end face of the first base 20.

The common contact piece 50 for a rotating signal has a pair of elastic contact portions 51, 52 always coming in contact with the inner circumferential face of the inner contact 70 described later. The lengths of the above elastic contact portions 51, 52 are differently set so as not to come in contact with the same portion of the inner circumferential face of the above inner contact 70.

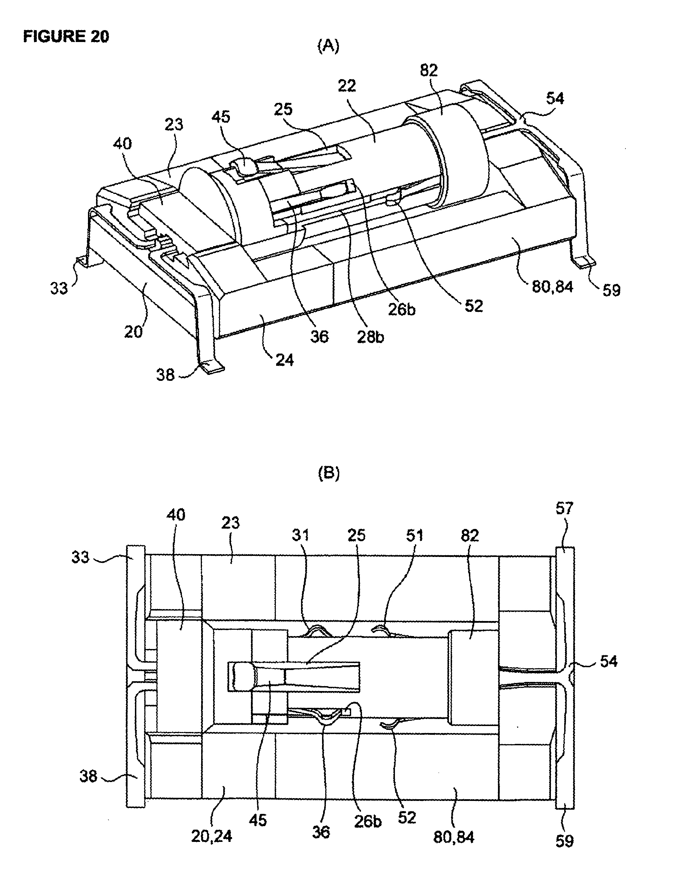

As shown in Figs. 19 and 20, the rotating operation body 60 is a sleeve body able to be inserted into the shaft portion 22 of the above first base 20, and a rotating operation portion 61 is formed in the central portion of the outer circumferential face of the rotating operation body 60. Pressing operation portions 62, 63 constructed by irregular faces are respectively formed on both sides of the above rotating operation portion 61. Further, a projecting stripe 64 for obtaining a click feeling is formed in a one-side edge portion of the inner circumferential face of the above rotating operation body 60. An unillustrated step portion is formed at a predetermined pitch in an intermediate portion of this inner circumferential face of the rotating operation body 60.

The inner contact 70 is constructed by a sleeve-shaped electric conductor, and an extending portion 71 is projected from a one-side edge portion of the inner contact 70 at a predetermined pitch in parallel with the axis.
The above step portion 65 is located between the above extending portions 71 by press-fitting to the inner circumferential face of the above rotating operation body 60. Similar to the first embodiment mode, the inner circumferential face of the extending portion 71 becomes the same face as the above step portion 65 so that no step difference is caused.

A push-down pin 81 (Fig. 19B) is projected on the lower face of the second base 80. On the other hand, a bearing portion 82 is integrally formed in the second base 80 so as to correspond to the above shaft portion 22. A pair of arm portions 83, 84 are projected in a side direction so as to respectively correspond to the arm receiving portions 23, 24 of the above first base 20. Holes 83c, 84c for fitting are formed on tip faces of the above arm portions 83, 84. Further, an unillustrated slit able to press-fit the tongue piece 55 for connection in the common terminal 54 for a rotating signal is arranged on an outer directional face of the above bearing portion 82. On the other hand, a fitting hole 87b for fitting the above shaft portion 22 and communicating with the above slit is arranged on an inner directional face of the bearing portion 82.

The above common terminal 54 for a rotating signal is constructed by a tongue piece 55 for connection coming in press contact with the above common contact piece 50 for a rotating signal and electrically connected to this common contact piece 50, and a pair of terminal portions 57, 59 extending from a base portion of this tongue piece 55 for connection.

Next, an assembly method of the rotating-pressing operation type electronic part 10 constructed by the above constructional parts will be explained.
Elastic contact portions 31, 36 of the first and second contact pieces 30, 35 for a rotating signal are respectively inserted into guide grooves 26a, 26b arranged on both sides of the outer circumferential face of the shaft portion 22 of the first base 20, and are positioned. Further, a wide width portion 46 of the spring 45 for an operating feel is press-fitted into the guide groove 25 of the above shaft portion 22, and the common contact piece 50 for a rotating signal is press-fitted into the slit 27 of the above shaft portion 22, and elastic contact portions 51, 52 are assembled into guide grooves 28a, 28b. Next, escape of the common contact pieces 30, 35 for a rotating signal is prevented by assembling a cover 40 for escape prevention to a side end face of the above first base 20 from a side direction.

Further, the shaft portion 22 of the first base 20 is inserted and assembled into the rotating operation body 60 press-fitting the inner contact 70 thereinto. Thus, the elastic contact portions 31, 36 of the first and second contact pieces 30, 35 for a rotating signal can respectively come in contact with the inner circumferential face of the extending portion 71 of the above inner contact 70. Further, the elastic contact portions 51, 52 of the above common contact piece 50 respectively always come in contact with a continuous inner circumferential face of the above inner contact 70. Further, the above spring 45 for an operating feel can abut on the projecting stripe 64 of the rotating operation body 60.

On the other hand, the connecting tongue piece 55 of the above common terminal 54 for a rotating signal is press-fitted and assembled into the bearing portion 82 of the second base 80. The above bearing portion 82 is then inserted from an opening portion of one side of the rotating operation body 60, and the shaft portion 22 of the first base 20 is fitted into the fitting hole 87b of the bearing portion 82. Projecting portions 23b, 24b for fitting in the arm receiving portions 23, 24 of the first base 20 are then inserted into holes 83c, 84c for fitting in the arm portions 83, 84, and are integrated. Therefore, the tongue piece 55 of the common terminal 54 comes in press contact with the common contact piece 50, and is electrically connected to this common contact piece 50, and the above rotating operation body 60 is rotatably supported.

Terminal portions 33, 38 and 57, 59 are then respectively positioned and soldered to connecting pads 112a, 112b and 113a, 113b of the print substrate illustrated in the first embodiment mode. Thus, push-down pins 21, 81 of the first base 20 and the second base 80 respectively abut on push button switches 111a, 111b. Since the other portions are approximately similar to those of the above first embodiment mode, their explanations are omitted.

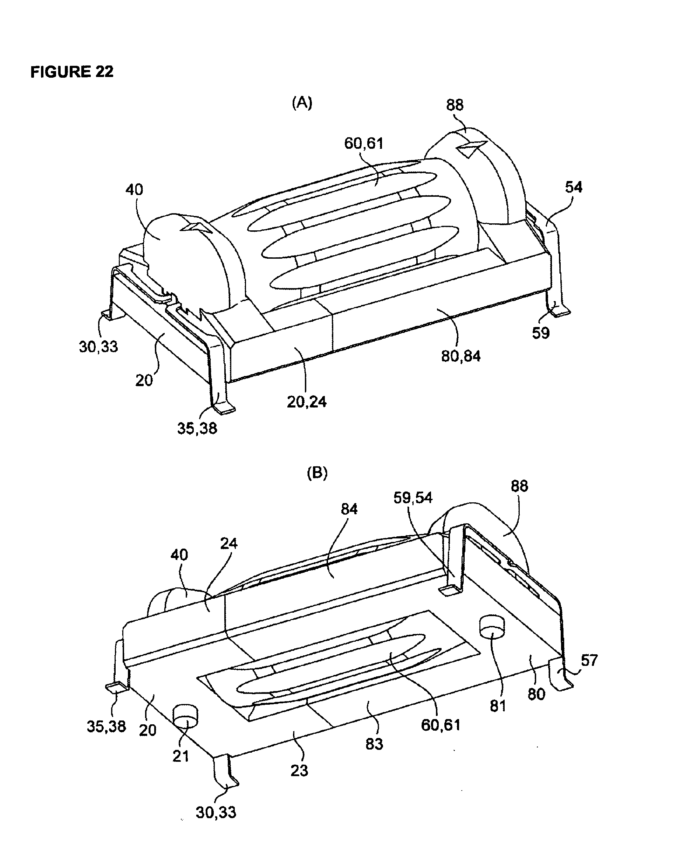

As shown in Figs. 22 to 24, a fifth embodiment mode shows a case in which pressing operation portions 40, 88 are set to be independent of the rotating operation portion 61 of the rotating operation body 60. The above pressing operation portion 40 functions the first and second contact pieces 30, 35 as a cover for escape prevention.
In accordance with this embodiment mode, since the push-down pins 21, 81 are located just below the pressing operation portions 40, 88 and the push button switches 111a, 111b can be operated, there is an advantage in that the operating feel is good. Since the other portions are approximately similar to those of the above fourth embodiment mode, the same portions are designated by the same reference numerals and their explanations are omitted.

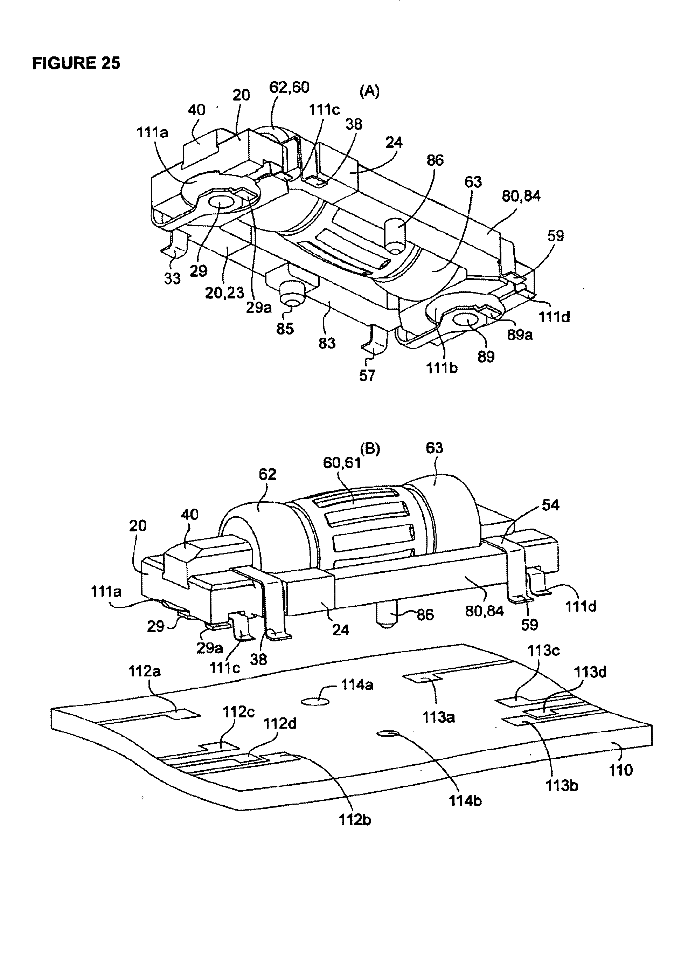

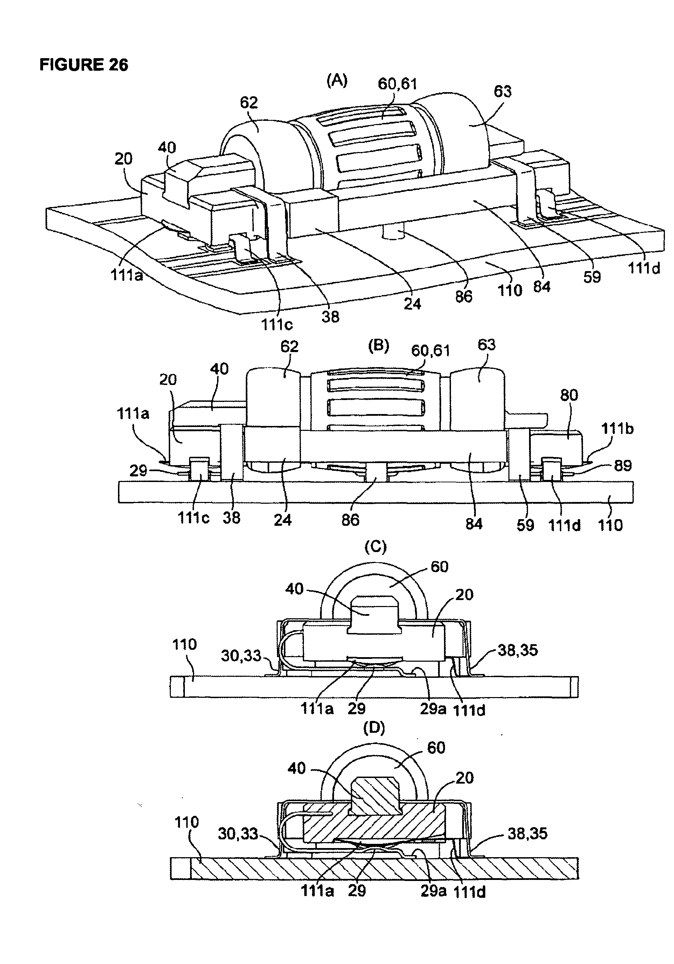

As shown in Figs. 25 and 26, a sixth embodiment mode shows a case in which push button switches 111a, 111b are integrated on the lower faces of the first base 20 and the second base 80. Lead terminals 111c, 111d respectively extend from the above push button switches 111a, 111b, and can be respectively connected to connecting pads 112d, 113d of the print substrate 110. Further, elastic operation pieces 29, 89 respectively press against the above push button switches 111a, 111b, and function as lead terminals and approximately have a J-shape. The elastic operation pieces 29, 89 are respectively integrally molded in the first base 20 and the second base 80. Tip portions 29a, 89a of the above elastic operation pieces 29, 89 are respectively soldered to connecting pads 112c, 113c arranged in the print substrate 110.

Accordingly, in accordance with this embodiment mode, the scroll bar within the monitor 107 of the above portable telephone 10 is moved by rotating the rotating operation body 60. Thereafter, the first base 20 and the second base 80 are lowered by pushing down the above rotating operation body 60. The elastic operation pieces 29, 89 respectively operate the push button switches 111a, 111b. Thus, selecting determination signals are respectively outputted through tip portions 29a, 89a of the elastic operation pieces 29, 89 and lead terminals 111c, 111d.
In accordance with this embodiment mode, it is not necessary to mount the push button switches 111a, 111b to the print substrate 110. Accordingly, there are advantages in that wiring of the print substrate 110 is easily designed and integration density can be raised.

### Industrial Applicability

The rotating-pressing operation type electronic part in the present invention is not limited to the portable telephone, but can be also applied to a personal computer and a mobile device.

## Claims

1. A rotating-pressing operation type electronic part (10) comprising a frame body (20, 80), and a rotating operation body (60) of a sleeve shape rotatably supported within said frame body (20, 80), and detecting a rotating direction and a rotating amount by rotating said rotating operation body (60), and operating a push button switch (111a, 111b) by pushing down said frame body (20, 80);
wherein an inner contact (70) constructed by a sleeve-shaped electric conductor and extending plural extending portions (71) in parallel at a predetermined angle pitch from an opening edge portion along an axis is inserted into said rotating operation body (60) and is integrated with said rotating operation body (60);
**characterized in that** at least one contact piece (30, 35) for a rotating signal is arranged on an inner circumferential face of said extending portion (71) so as to come in contact therewith within said inner contact (70); and
a common contact piece (50) of a common terminal (54) is arranged so as to always come in contact with an inner circumferential face of the inner contact (70) except for said extending portion (71).

2. The rotating-pressing operation type electronic part (10) according to claim 1, wherein the common contact piece (50) is constructed by plural elastic contact portions (51, 52) always coming in contact with the inner circumferential face except for the extending portion (71) of the inner contact (70).

3. The rotating-pressing operation type electronic part (10) according to claim 2, wherein the lengths of the plural elastic contact portions (51, 52) are different from each other.

4. A rotating-pressing operation type electronic part (10) comprising a frame body (20, 80), and a rotating operation body (60) of a sleeve shape rotatably supported within said frame body (20, 80), and detecting a rotating direction and a rotating amount by rotating said rotating operation body (60), and operating a push button switch (111a, 111b) by pushing down said frame body (20, 80);
wherein an inner contact (70) constructed by an electric conductor with a contact portion (72) of a disk-shape and extending plural extending portions (71) in parallel at a predetermined angle pitch from an outer circumferential edge portion of the contact portion (72) along an axis is inserted into said rotating operation body (60) and is integrated with said rotating operation body (60);
**characterized in that** at least one contact piece (30, 35) for a rotating signal is arranged on an inner circumferential face of said extending portion (71) so as to come in contact therewith within said inner contact (70); and
a contact portion (55a) of a common terminal(54) is arranged so as to always come in contact with an outer directional face of the contact portion (72) of the inner contact (70).

5. The rotating-pressing operation type electronic part (10) according to any one of claims 1 to 4, wherein elastic contact portions (31, 36) of the plural contact pieces (30, 35) for a rotating signal able to come in contact with the inner circumferential face of the extending portion (71) of the inner contact (70) are set to different length sizes.

6. The rotating-pressing operation type electronic part (10) according to any one of claims 1 to 5, wherein a step portion fitted between the extending portions (71) of the inner contact (70) and setting the same face is arranged on the inner circumferential face of the rotating operation body (60).

7. The rotating-pressing operation type electronic part (10) according to any one of claims 1 to 6, wherein a push button switch (111a, 111b) is arranged on a lower face of the frame body (20, 80).

8. An electronic device using a rotating-pressing operation type electronic part (10) in which the electronic device is constructed by the rotating-pressing operation type electronic part (10) according to any one of claims 1 to 6; and a print substrate (110) mounting a push button switch (111a, 111b) so as to be located just below the frame body (20, 80) of said rotating-pressing operation type electronic part (10);
wherein detecting data of a rotating direction and a rotating amount of said rotating operation body (60) are detected through the inner contact (70) and the contact piece (30, 35) for a rotating signal by rotating the rotating operation body (60) of said rotating-pressing operation type electronic part (10) mounted to said print substrate (110), and said push button switch (111a, 111b) is operated by pushing down said frame body (20, 80).

9. An electronic device using a rotating-pressing operation type electronic part (10) in which the electronic device is constructed by the rotating-pressing operation type electronic part (10) according to claim 7; and the print substrate (110) able to directly electrically connect a lead terminal of the push button switch (111a, 111b) of said rotating-pressing operation type electronic part (10),
wherein detecting data of a rotating direction and a rotating amount of said rotating operation body are detected through the inner contact (70) and the contact piece (30, 35) for a rotating signal by rotating the rotating operation body (60) of said rotating-pressing operation type electronic part (10) mounted to said print substrate (110), and said push button switch (111a, 111b) is operated by pushing down said frame body (20, 80).

## Patentansprüche

1. Elektronische Komponente (10) des Dreh- und Druckbetriebstyps, die einen Rahmenkörper (20, 80) und einen Drehbetriebskörper (60) mit einer Hülsenform, der drehbar innerhalb des Rahmenkörpers (20, 80) gestützt ist, umfasst und eine Drehrichtung und einen Drehbetrag durch Drehen des Drehbetriebskörpers (60) und das Betreiben eines Druckschalters (111a, 111b) durch Niederdrücken des Rahmenkörpers (20, 80) erfasst;
wobei ein Innenkontakt (70), der durch einen hülsenförmigen elektrischen Leiter konstruiert ist und von dem sich unter einem vorgegebenen Winkelabstand von einem Öffnungsrandabschnitt entlang einer Achse parallel mehrere Verlängerungsabschnitte (71) erstrecken, in den Drehbetriebskörper (60) eingeführt ist und mit dem Drehbetriebskörper (60) integriert ist;
**dadurch gekennzeichnet, dass** an einer Innenumfangsfläche des Verlängerungsabschnitts (71) wenigstens ein Kontaktstück (30, 35) für ein Drehsignal so angeordnet ist, dass es innerhalb des Innenkontakts (70) damit in Kontakt gelangt; und
ein gemeinsames Kontaktstück (50) eines gemeinsamen Anschlusses (54) so angeordnet ist, dass es mit einer Innenumfangsfläche des Innenkontakts (70) mit Ausnahme des Verlängerungsabschnitts (71) immer in Kontakt gelangt.

2. Elektronische Komponente (10) des Dreh- und Druckbetriebstyps nach Anspruch 1, bei der das gemeinsame Kontaktstück (50) durch mehrere elastische Kontaktabschnitte (51, 52) konstruiert ist, die mit der Innenumfangsfläche mit Ausnahme des Verlängerungsabschnitts (71) des Innenkontakts (70) immer in Kontakt gelangen.

3. Elektronische Komponente (10) des Dreh- und Druckbetriebstyps nach Anspruch 2, bei der die Längen der mehreren elastischen Kontaktabschnitte (51, 52) voneinander verschieden sind.

4. Elektronische Komponente (10) des Dreh- und Druckbetriebstyps, die einen Rahmenkörper (20, 80) und einen Drehbetriebskörper (60) mit einer Hülsenform, der drehbar innerhalb des Rahmenkörpers (20, 80) gestützt ist, umfasst und eine Drehrichtung und einen Drehbetrag durch Drehen des Drehbetriebskörpers (60) und das Betreiben eines Druckschalters (111a, 111b) durch Niederdrücken des Rahmenkörpers (20, 80) erfasst;
wobei ein Innenkontakt (70), der durch einen elektrischen Leiter mit einem scheibenförmigen Kotaktabschnitt (72) konstruiert ist und von dem sich unter einem vorgegebenen Winkelabstand von einem Außenumfangsrandabschnitt des Kontaktabschnitts (72) entlang einer Achse parallel mehrere Verlängerungsabschnitte (71) erstrecken, in den Drehbetriebskörper (60) eingeführt ist und mit dem Drehbetriebskörper (60) integriert ist;
**dadurch gekennzeichnet, dass** an einer Innenumfangsfläche des Verlängerungsabschnitts (71) wenigstens ein Kontaktstück (30, 35) für ein Drehsignal so angeordnet ist, dass es innerhalb des Innenkontakts (70) damit in Kontakt gelangt; und
ein Kontaktabschnitt (55a) eines gemeinsamen Anschlusses (54) so angeordnet ist, dass er mit einer Außenrichtungsfläche des Kontaktabschnitts (72) des Innenkontakts (70) immer in Kontakt gelangt.

5. Elektronische Komponente (10) des Dreh- und Druckbetriebstyps nach einem der Ansprüche 1 bis 4, bei der die elastischen Kontaktabschnitte (31, 36) der mehreren Kontaktstücke (30, 35) für ein Drehsignal, die mit der Innenumfangsfläche des Verlängerungsabschnitts (71) des Innenkontakts (70) in Kontakt gelangen können, auf verschiedene Längengrößen eingestellt sind.

6. Elektronische Komponente (10) des Dreh- und Druckbetriebstyps nach einem der Ansprüche 1 bis 5, bei der an der Innenumfangsfläche des Drehbetriebskörpers (60) ein Stufenabschnitt angeordnet ist, der zwischen die Verlängerungsabschnitte (71) des Innenkontakts (70) eingepasst ist und dieselbe Fläche festsetzt.

7. Elektronische Komponente (10) des Dreh- und Druckbetriebstyps nach einem der Ansprüche 1 bis 6, bei der auf einer Unterseite des Rahmenkörpers (20, 80) ein Druckschalter (111a, 111b) angeordnet ist.

8. Elektronische Vorrichtung, die eine elektronische Komponente (10) des Dreh- und Druckbetriebstyps verwendet, in der die elektronische Vorrichtung durch die elektronische Komponente (10) des Dreh- und Druckbetriebstyps nach einem der Ansprüche 1 bis 6 konstruiert ist; und in der an einem Druckträger (110) ein Druckschalter (111a, 111b) so angebracht ist, dass er sich direkt unter dem Rahmenkörper (20, 80) der elektronischen Komponente (10) des Dreh- und Druckbetriebstyps befindet;
wobei die Erfassungsdaten einer Drehrichtung und eines Drehbetrags des Drehbetriebskörpers (60) durch den Innenkontakt (70) und durch das Kontaktstück (30, 35) für ein Drehsignal durch Drehen des Drehbetriebskörpers (60) der elektronischen Komponente (10) des Dreh- und Druckbetriebstyps, die an dem Druckträger (110) angebracht ist, erfasst werden und wobei der Druckschalter (111a, 111b) durch Niederdrücken des Rahmenkörpers (20, 80) betrieben wird.

9. Elektronische Vorrichtung, die eine elektronische Komponente (10) des Dreh- und Druckbetriebstyps verwendet, in der die elektronische Vorrichtung durch die elektronische Komponente (10) des Dreh- und Druckbetriebstyps nach Anspruch 7 konstruiert ist; und in der der Druckträger (110) einen Leiteranschluss des Druckschalters (111a, 111b) der elektronischen Komponente (10) des Dreh- und Druckbetriebstyps direkt elektrisch verbinden kann,
wobei die Erfassungsdaten einer Drehrichtung und eines Drehbetrags des Drehbetriebskörpers durch den Innenkontakt (70) und durch das Kontaktstück (30, 35) für ein Drehsignal durch Drehen des Drehbetriebskörpers (60) der elektronischen Komponente (10) des Dreh- und Druckbetriebstyps, die an dem Druckträger (110) angebracht ist, erfasst werden und wobei der Druckschalter (111a, 111b) durch Niederdrücken des Rahmenkörpers (20, 80) betrieben wird.

## Revendications

1. Pièce électronique de type à actionnement par rotation et pression (10) comprenant un corps de cadre (20, 80), et un corps à actionnement par rotation (60) en forme de gaine supporté de manière rotative à l'intérieur dudit corps de cadre (20, 80), et détectant une direction de rotation et une quantité de rotation en faisant tourner ledit corps à actionnement par rotation (60), et en actionnant un commutateur à bouton-poussoir (111a, 111b) en appuyant sur ledit corps de cadre (20, 80) ;
dans laquelle un contact interne (70) constitué d'un conducteur électrique en forme de gaine et s'étendant sur plusieurs portions d'extension (71) en parallèle à un pas d'angle prédéterminé à partir d'une portion de bord d'ouverture le long d'un axe est inséré dans ledit corps à actionnement par rotation (60) et est intégré au dit corps à actionnement par rotation (60) ;
**caractérisée en ce qu'**au moins une pièce de contact (30, 35) pour un signal de rotation est agencée sur une face circonférentielle interne de ladite portion d'extension (71) de manière à entrer en contact avec celle-ci à l'intérieur dudit contact interne (70) ; et
une pièce de contact commune (50) d'une borne commune (54) est agencée de manière à toujours entrer en contact avec une face circonférentielle interne du contact interne (70) sauf pour ladite portion d'extension (71).

2. Pièce électronique de type à actionnement par rotation et pression (10) selon la revendication 1, dans laquelle la pièce de contact commune (50) est constituée d'une pluralité de portions de contact élastiques (51, 52) entrant toujours en contact avec la face circonférentielle interne sauf pour la portion d'extension (71) du contact interne (70).

3. Pièce électronique de type à actionnement par rotation et pression (10) selon la revendication 2, dans laquelle les longueurs de la pluralité de portions de contact élastiques (51, 52) sont différentes l'une de l'autre.

4. Pièce électronique de type à actionnement par rotation et pression (10) comprenant un corps de cadre (20, 80), et un corps à actionnement par rotation (60) en forme de gaine supporté de manière rotative à l'intérieur dudit corps de cadre (20, 80), et détectant une direction de rotation et une quantité de rotation en faisant tourner ledit corps à actionnement par rotation (60), et en actionnant un commutateur à bouton-poussoir (111a, 111b) en appuyant sur ledit corps de cadre (20, 80) ;
dans laquelle un contact interne (70) constitué d'un conducteur électrique avec une portion de contact (72) en forme de disque et s'étendant sur plusieurs portions d'extension (71) en parallèle à un pas d'angle prédéterminé à partir d'une portion de bord circonférentielle externe de la portion de contact (72) le long d'un axe est inséré dans ledit corps à actionnement par rotation (60) et est intégré au dit corps à actionnement par rotation (60) ;
**caractérisée en ce qu'**au moins une pièce de contact (30, 35) pour un signal de rotation est agencée sur une face circonférentielle interne de ladite portion d'extension (71) de manière à entrer en contact avec celle-ci à l'intérieur dudit contact interne (70) ; et
une portion de contact (55a) d'une borne commune (54) est agencée de manière à toujours entrer en contact avec une face directionnelle externe de la portion de contact (72) du contact interne (70).

5. Pièce électronique de type à actionnement par rotation et pression (10) selon l'une quelconque des revendications 1 à 4, dans laquelle des portions de contact élastiques (31, 36) de la pluralité de pièces de contact (30, 35) pour un signal de rotation capables d'entrer en contact avec la face circonférentielle interne de la portion d'extension (71) du contact interne (70) sont réglées à des tailles de longueurs différentes.

6. Pièce électronique de type à actionnement par rotation et pression (10) selon l'une quelconque des revendications 1 à 5, dans laquelle une portion d'escalier montée entre les portions d'extension (71) du contact interne (70) et faisant face à la même face est agencée sur la face circonférentielle interne du corps à actionnement par rotation (60).

7. Pièce électronique de type à actionnement par rotation et pression (10) selon l'une quelconque des revendications 1 à 6, dans laquelle un commutateur à bouton-poussoir (111a, 111b) est agencé sur une face inférieure du corps de cadre (20, 80).

8. Dispositif électronique utilisant une pièce électronique de type à actionnement par rotation et pression (10), dans lequel le dispositif électronique est constitué de la pièce électronique de type à actionnement par rotation et pression (10) selon l'une quelconque des revendications 1 à 6, et d'un substrat d'impression (110) montant un commutateur à bouton-poussoir (111a, 111b) de manière à être situé juste au dessous du corps de cadre (20, 80) de ladite pièce électronique de type à actionnement par rotation et pression (10) ;
dans lequel des données de détection d'une direction de rotation et d'une quantité de rotation dudit corps à actionnement par rotation (60) sont détectées par le biais du contact interne (70) et de la pièce de contact (30, 35) pour un signal de rotation en faisant tourner le corps à actionnement par rotation (60) de ladite pièce électronique de type à actionnement par rotation et pression (10) montée sur ledit substrat d'impression (110), et ledit commutateur à bouton-poussoir (111a, 111b) est actionné en appuyant sur ledit corps de cadre (20, 80).

9. Dispositif électronique utilisant une pièce électronique de type à actionnement par rotation et pression (10), dans lequel le dispositif électronique est constitué de la pièce électronique de type à actionnement par rotation et pression (10) selon la revendication 7, et du substrat d'impression (110) capable de connecter électriquement directement une borne de conducteur du commutateur à bouton-poussoir (111a, 111b) de ladite pièce électronique de type à actionnement par rotation et pression (10) ;
dans lequel des données de détection d'une direction de rotation et d'une quantité de rotation dudit corps à actionnement par rotation sont détectées par le biais du contact interne (70) et de la pièce de contact (30, 35) pour un signal de rotation en faisant tourner le corps à actionnement par rotation (60) de ladite pièce électronique de type à actionnement par rotation et pression (10) montée sur ledit substrat d'impression (110), et ledit commutateur à bouton-poussoir (111a, 111b) est actionné en appuyant sur ledit corps de cadre (20, 80).
